(19) Europäisches Patentamt / European Patent Office / Office européen des brevets

(11) **EP 4 441 697 B1**

(12) **EUROPEAN PATENT SPECIFICATION**

(45) Date of publication and mention
of the grant of the patent:
**24.12.2025  Bulletin 2025/52**

(21) Application number: **22823656.8**

(22) Date of filing: **01.11.2022**

(51) International Patent Classification (IPC):
*G06T 5/92* (2024.01)          *G06T 5/70* (2024.01)

(52) Cooperative Patent Classification (CPC):
**G06T 5/70; G06T 5/92;** G06T 2207/10016;
G06T 2207/20208

(86) International application number:
**PCT/US2022/048619**

(87) International publication number:
**WO 2023/096728 (01.06.2023 Gazette 2023/22)**

(54) **DENOISING FOR SDR-TO-HDR LOCAL RESHAPING**

ENTRAUSCHEN FÜR DIE LOKALE UMFORMUNG VON SDR ZU HDR

DÉBRUITAGE POUR LE REMODELAGE LOCAL DE SDR À HDR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.11.2021  EP 21210983
29.11.2021  US 202163283684 P**

(43) Date of publication of application:
**09.10.2024  Bulletin 2024/41**

(73) Proprietor: **Dolby Laboratories Licensing
Corporation
San Francisco, CA 94103 (US)**

(72) Inventors:
• **LIU, Runze**
**Raleigh, North Carolina 27606 (US)**
• **HUANG, Tsung-Wei**
**San Francisco, California 94103 (US)**
• **SU, Guan-Ming**
**San Francisco, California 94103 (US)**

(74) Representative: **Dolby International AB
Patent Group Europe
77 Sir John Rogerson's Quay
Block C
Grand Canal Docklands
Dublin, D02 VK60 (IE)**

(56) References cited:
**WO-A1-2021/202933      US-A1- 2021 358 089**

• **GOYAL BHAWNA ET AL: "Image denoising
review: From classical to state-of-the-art
approaches", INFORMATION FUSION,
ELSEVIER, US, vol. 55, 6 September 2019
(2019-09-06), pages 220 - 244, XP085911324,
ISSN: 1566-2535, [retrieved on 20190906], DOI:
10.1016/J.INFFUS.2019.09.003**
• **ROY J JEVNISEK ET AL: "Co-occurrence Filter",
ARXIV.ORG, CORNELL UNIVERSITY LIBRARY,
201 OLIN LIBRARY CORNELL UNIVERSITY
ITHACA, NY 14853, 12 March 2017 (2017-03-12),
XP080756407, DOI: 10.1109/CVPR.2017.406**
• **ANONYMOUS: "Local standard deviation of
image - MATLAB stdfilt - MathWorks
Deutschland", 3 July 2016 (2016-07-03),
XP055921311, Retrieved from the Internet
<URL:https://web.archive.org/web/
20160703083447/https://de.mathworks.com/
help/images/ref/stdfilt.html> [retrieved on
20220516]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS

This application claims the benefit of priority from U.S. Provisional Patent Application No. 63/283,684, filed on November 29, 2021, and European Patent Application No. 21210983.9, filed November 29, 2021.

TECHNOLOGY

The present disclosure relates generally to image processing operations. More particularly, an embodiment of the present disclosure relates to video codecs.

BACKGROUND

As used herein, the term "dynamic range" (DR) may relate to a capability of the human visual system (HVS) to perceive a range of intensity (e.g., luminance, luma) in an image, e.g., from darkest blacks (darks) to brightest whites (highlights). In this sense, DR relates to a "scene-referred" intensity. DR may also relate to the ability of a display device to adequately or approximately render an intensity range of a particular breadth. In this sense, DR relates to a "display-referred" intensity. Unless a particular sense is explicitly specified to have particular significance at any point in the description herein, it should be inferred that the term may be used in either sense, e.g. interchangeably.

As used herein, the term high dynamic range (HDR) relates to a DR breadth that spans the some 14-15 or more orders of magnitude of the human visual system (HVS). In practice, the DR over which a human may simultaneously perceive an extensive breadth in intensity range may be somewhat truncated, in relation to HDR. As used herein, the terms enhanced dynamic range (EDR) or visual dynamic range (VDR) may individually or interchangeably relate to the DR that is perceivable within a scene or image by a human visual system (HVS) that includes eye movements, allowing for some light adaptation changes across the scene or image. As used herein, EDR may relate to a DR that spans 5 to 6 orders of magnitude. While perhaps somewhat narrower in relation to true scene referred HDR, EDR nonetheless represents a wide DR breadth and may also be referred to as HDR.

In practice, images comprise one or more color components (e.g., luma Y and chroma Cb and Cr) of a color space, where each color component is represented by a precision of n-bits per pixel (e.g., n=8). Using non-linear luminance coding (e.g., gamma encoding), images where $n \leq 8$ (e.g., color 24-bit JPEG images) are considered images of standard dynamic range, while images where n > 8 may be considered images of enhanced dynamic range.

A reference electro-optical transfer function (EOTF) for a given display characterizes the relationship between color values (e.g., luminance) of an input video signal to output screen color values (e.g., screen luminance) produced by the display. For example, ITU Rec. ITU-R BT. 1886, "Reference electro-optical transfer function for flat panel displays used in HDTV studio production," (March 2011), defines the reference EOTF for flat panel displays. Given a video stream, information about its EOTF may be embedded in the bitstream as (image) metadata. The term "metadata" herein relates to any auxiliary information transmitted as part of the coded bitstream and assists a decoder to render a decoded image. Such metadata may include, but are not limited to, color space or gamut information, reference display parameters, and auxiliary signal parameters, as those described herein.

The term "PQ" as used herein refers to perceptual luminance amplitude quantization. The human visual system responds to increasing light levels in a very nonlinear way. A human's ability to see a stimulus is affected by the luminance of that stimulus, the size of the stimulus, the spatial frequencies making up the stimulus, and the luminance level that the eyes have adapted to at the particular moment one is viewing the stimulus. In some embodiments, a perceptual quantizer function maps linear input gray levels to output gray levels that better match the contrast sensitivity thresholds in the human visual system. An example PQ mapping function is described in SMPTE ST 2084:2014 "High Dynamic Range EOTF of Mastering Reference Displays" (hereinafter "SMPTE"), where given a fixed stimulus size, for every luminance level (e.g., the stimulus level, etc.), a minimum visible contrast step at that luminance level is selected according to the most sensitive adaptation level and the most sensitive spatial frequency (according to HVS models).

Displays that support luminance of 200 to 1,000 cd/m$^2$ or nits typify a lower dynamic range (LDR), also referred to as a standard dynamic range (SDR), in relation to EDR (or HDR). EDR content may be displayed on EDR displays that support higher dynamic ranges (e.g., from 1,000 nits to 5,000 nits or more). Such displays may be defined using alternative EOTFs that support high luminance capability (e.g., 0 to 10,000 or more nits). An example of such an EOTF is defined in SMPTE 2084 and Rec. ITU-R BT.2100, "Image parameter values for high dynamic range television for use in production and international programme exchange," (06/2017). As appreciated by the inventors here, improved techniques for generating video content with high dynamic range and no or little visual artifacts are desired.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

WO2021202933A1 describes that, in an encoder, a high-dynamic range (HDR) image is encoded using a family of local forward reshaping functions selected according to an array of forward mapping indices (FMI) indicating which local forward reshaping function needs to be used for each pixel in the HDR image to generate a reshaped standard dynamic range (SDR) image. A decoder, given the reshaped SDR image, iteratively generates a reconstructed HDR image and estimated reshaped SDR images by adjusting a local FMI array and a local array of backward mapping indices (BMI) until an error metric related to the difference between the local BMI and FMI arrays and the difference between the estimate SDR images and the reshaped SDR image satisfy a convergence criterion.

GOYAL BHAWNA ET AL: 'Image denoising review: from classical to state-of-the-art approaches' INFORMATION FUSION, ELSEVIER, US, vol. 55, 6 September 2019, pages 220-244, XP085911324, focuses on classifying and comparing some of the significant works in the field of denoising.

SUMMARY

The present disclosure provides a computer-implemented method ad detailed in claim 1, an apparatus according to claim 14, and a non-transitory computer-readable storage medium according to claim 15. Advantageous embodiments are provided in dependent claims.

BRIEF DESCRIPTION OF THE DRAWINGS

An embodiment of the present invention is illustrated by way of example, and not by way of limitation, in the figures of the accompanying drawings and in which like reference numerals refer to similar elements and in which:

FIG. 1 depicts an example process of a video delivery pipeline;
FIG. 2A through FIG. 2E illustrate example flows for applying denoising for local reshaping; FIG. 2F illustrates example operations for collecting co-occurrence statistics; FIG. 2G illustrates example clipping and quantization operations; FIG. 2H illustrates example downsampling operations; FIG. 2I illustrates an example processing flow for obtaining a binary cluster map; FIG. 2J illustrates example denoising reshaping function index maps with co-occurrence statistics; FIG. 2K illustrates an example process flow for generating a weight mask;
FIG. 3A illustrates an example co-occurrence matrix or array of co-occurrence statistics; FIG. 3B illustrates example clipping and normalization of a standard deviation map;
FIG. 4 illustrates an example process flow; and
FIG. 5 illustrates a simplified block diagram of an example hardware platform on which a computer or a computing device as described herein may be implemented.

DESCRIPTION OF EXAMPLE EMBODIMENTS

In the following description, for the purposes of explanation, numerous specific details are set forth in order to provide a thorough understanding of the present disclosure. It will be apparent, however, that the present disclosure may be practiced without these specific details. In other instances, well-known structures and devices are not described in exhaustive detail, in order to avoid unnecessarily occluding, obscuring, or obfuscating the present disclosure.

Summary

Denoising techniques as described herein can be implemented along with reshaping techniques to (backward) reshape or up-convert image data of a relatively narrow dynamic range such as SDR image data into image data of a higher dynamic range such as HDR image data with enhanced local contrast and color saturation. These techniques can help improve image quality and prevent or reduce visual artifacts - induced by noises in the SDR image data - in the resultant HDR image data.

As used herein, "up-convert" or "(backward) reshape" refers to convert image data of a lower dynamic range to image data of a higher dynamic range through reshaping operations such as local or global reshaping operations. Local reshaping refers to up-conversion or backward reshaping operations that apply different reshaping functions or mappings to different pixels of the input image in accordance with a local reshaping function index map. Thus, in local reshaping, a first reshaping function specified in the local reshaping function index map and applied to a first pixel of the input image may be a different function from a second reshaping function specified in the same local reshaping function index map and applied to a second different pixel of the input image.

A local reshaping function index map includes (e.g., a two-dimension array of, etc.) index values used to identify specific reshaping functions or mappings. The index values may include, but are not necessarily limited to only, (local) L1-mid values computed from (e.g., edge preserving, boundary preserving, etc.) spatial filtering performed on an input SDR image.

Example local reshaping operations and local reshaping function index maps (e.g., comprising L1-mid values, etc.) are described in PCT Application Ser. No. PCT/US2021/053241, filed on October 1, 2021. Example global operations are described in U.S. Provisional Patent Application Ser. No. 62/136,402, filed on March 20, 2015, (also published on Jan. 18, 2018, as U.S. Patent Application Publication Ser. No. 2018/0020224), and PCT Application Ser. No. PCT/US2019/031620, filed on May 9, 2019.

Reshaping operations such as local reshaping operations may be used in SDR-to-HDR up-conversion to enhance visual quality in image contents in terms of dynamic range (from the darkest to the brightest in an image portion up to an entire image), local or global contrasts, local or global color saturation, etc.

However, noises may exist in original or input SDR images, such as film grain noises, camera noises, etc. In addition, noises may also be introduced from image processing/coding operations such as video compression. These noises may be introduced into and even enhanced or enlarged in HDR image generated from reshaping the input SDR images to become visually noticeable visual artifacts, which can be especially problematic on big screen image displays as the Human Visual System (HVS) can resolve more and finer details on these image displays as compared with small screen image display such as mobile devices.

Techniques as described herein can be implemented to denoise a reshaping function index map using co-occurrence filtering. The resultant denoised reshaping function index map can then be used to perform reshaping operations such as local reshaping operations on input image contents such as SDR image contents to generate relatively high quality image contents such as HDR image contents that are relatively free of noise-causing visual artifacts. The HDR image contents can be rendered on various HDR image displays including but not limited to big screen image displays.

Example embodiments described herein relate to generating images of a first dynamic range from input images of a second dynamic range lower than the first dynamic range. A first array of co-occurrence statistics in connection with an input image of the second dynamic range is generated. A second array of reshaping function index values for selecting reshaping functions from among a plurality of candidate reshaping functions is generated. To generate a reshaped image of the first dynamic range, denoising operations are performed based at least in part on the first array of co-occurrence statistics, whereas reshaping operations are performed based at least in part on the second array of reshaping function index values.

Example Video Delivery Processing Pipeline

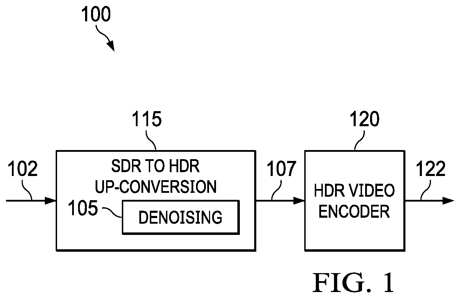

FIG. 1 depicts an example process of a video delivery pipeline (100) showing various stages from video capture/generation to an HDR or SDR display. Example HDR displays may include, but are not limited to, image displays operating in conjunction with TVs, mobile devices, home theaters, etc. Example SDR displays may include, but are not limited to, SDR TVs, mobile devices, home theater displays, head-mounted display devices, wearable display devices, etc. It should be noted that reshaping denoising can be performed in either encoder/server side (before video compression) or decoder/playback side (after the video decompression). To support playback side reshaping denoising, different system configurations other than what is depicted in FIG. 1 may be used. Different image metadata formats other than what is used by processing components as depicted in FIG. 1 may be used to convey image metadata in these different system configurations. For the purpose of illustration only, FIG. 1 is used to illustrate or depict a reshaping denoising process performed at server side to generate denoised reshaping function index map such as denoised local reshaping function index map.

Video frames such as a sequence of consecutive input SDR images 102 can be received by an SDR to HDR up-conversion 115 or a denoising block 105 therein. These SDR images (102) may be received from a video source or retrieved from a video data store. Some or all of the SDR images (102) can be generated from source images, for example through (e.g., automatic with no human input, manual, automatic with human input, etc.) video editing or transformation operations, color grading operations, etc. The source images may be digitally captured (e.g., by a digital camera, etc.), generated by converting analog camera pictures captured on film to a digital format, generated by a computer (e.g., using computer animation, image rendering, etc.), and so forth. The SDR images (102) may be images relating to one or more of: movie releases, archived media programs, media program libraries, video recordings/clips, media programs, TV programs, user-generated video contents, etc. Additionally, optionally or alternatively, in some operational scenarios, the SDR images (102) may be reshaped SDR images generated by forward reshaping source images such as original pre-reshaped HDR or original pre-shaped SDR images.

The denoising block (105) performs denoising operations in connection with each SDR image in the sequence of consecutive SDR images (102). For example, the denoising block (105) may generate a denoised local reshaping function index map to be used to apply denoised local reshaping operations to each SDR image in the sequence of consecutive SDR images (102) to generate a respective (reshaped) HDR image in a sequence of corresponding consecutive (reshaped) HDR images that depict the same visual semantic content as the SDR images (102) but with higher dynamic range, more vivid colors, less noises, less visible visual artifacts, etc., in comparison with the SDR images (102).

Some or all of the SDR images (102) and/or corresponding denoised local reshaping function index maps can be used by the SDR to HDR up-conversion block (115) to generate backward reshaping mappings (e.g., BLUT, a backward reshaping function/curve or polynomial set, MMR coefficients, etc.) which when applied to the input SDR image (102) generate corresponding HDR images 107.

The HDR images (107) may be encoded by an HDR video encoder 120 in a video signal 122 (e.g., a coded bitstream, etc.) or a set of consecutive video segments. Given the video signal (122), a recipient device such as a mobile phone can decide - as a part of internally processing or post-processing the video signal (122) on the device - to use the metadata along with the SDR image data to generate and render images with higher dynamic range such as HDR, more vivid color, less noises, less visual artifacts, etc., within display capabilities of the recipient device.

Example video signals or video segments may include, but are not necessarily limited to, single layer video signals/segments, etc. In some embodiments, the HDR video encoder (120) may comprise audio and video encoders, such as those defined by ATSC, DVB, DVD, Blu-Ray, and other delivery formats, to generate the video signal (122) or video segments.

The video signal (122) or video segments are then delivered downstream to receivers such as mobile devices, tablet computers, decoding and playback devices, media source devices, media streaming client devices, television sets (e.g., smart TVs, big screen TVs, wall TVs, etc.), set-top boxes, movie theaters, and the like.

In some operational scenarios, once the HDR images are generated through denoised local reshaping, a video encoder can encode the HDR images or a version of HDR images derived from the locally reshaped HDR images in (e.g., a base layer of, etc.) a video signal, instead of encoding SDR images in (e.g., the base layer of, etc.) the video signal. The HDR images decoded from such a video signal may be directly watchable on an HDR display.

Denoising for Local Reshaping

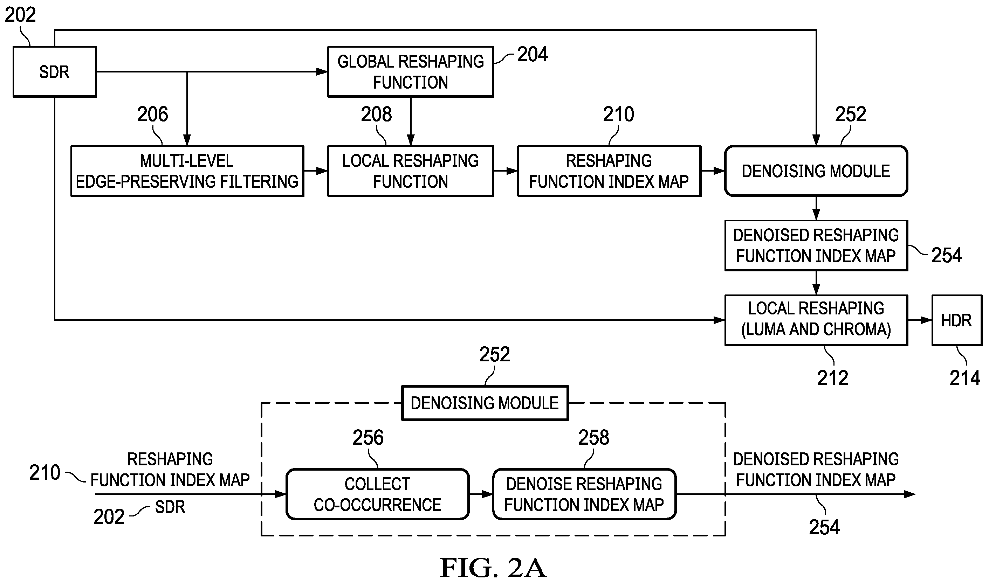

FIG. 2A illustrates a first example flow for applying local reshaping operations (e.g., 212, etc.) with denoised reshaping function index maps to generate corresponding HDR images from input SDR images. An image processing system, a processing block (e.g., 105 of FIG. 1, etc.) therein, may implement or perform this process flow. In some operational scenarios, given an input SDR image 202, a global reshaping function 204 is selected to generate a global reshaped HDR image. The global reshaped HDR image is used to determine or represent the main HDR look for an output HDR image 214 that is to be generated by the local reshaping operations (212) from the input SDR image (202).

In some operational scenarios, a (backward) reshaping function used to generate an HDR image from an SDR image may be specified by a reshaping function index value. In a non-limiting example, the reshaping function index value may be specified with L1-mid values. Example reshaping function index values such as L1-mid values are described in the previously mentioned U.S. Provisional Patent Application Ser. No. 63/086,699.

A goal for applying the local reshaping operations in combination with denoising operations up to a per-pixel level to generate the HDR image (214) from the input SDR image (202) is to enhance local contrast ratios in local regions of the HDR image (214), without changing local brightness levels of these local regions of HDR image (214) and without having visible artifacts originated from noises existing in the input SDR image (202), while maintaining the same main HDR look of a global reshaped HDR image generated from the global reshaping function (204) in the HDR image (214) generated from the local reshaping operations in combination with denoising operations.

To help prevent or reduce common artifacts such as halo artifacts that could be generated from changing local brightness levels adjacent to edges/boundaries of visual objects/characters, high-precision filtering such as multi-level edge-preserving filtering 206 may be applied to the input SDR image (202) into a filtered image. The filtered image may be used to derive or estimate local brightness levels (or local region specific brightness levels) in different local regions (up to a per-pixel precision or up to a local region surrounding each pixel) of the input SDR image (202). The estimated local brightness levels in the different local regions (up to a per-pixel precision or up to a local region surrounding each pixel) of the input SDR image (202) may be used to estimate or predict local reshaping function index values such as local L1-mid values (up to a per-pixel precision or up to a local region surrounding each pixel) in the HDR image (214). Example predictions of reshaping function index values such as L1-mid values are described in the previously mentioned U.S. Provisional Patent Application Ser. No. 63/086,699.

To improve efficiency or response time of local reshaping operations, a family of local reshaping function(s) 208 may be loaded or built (e.g., initially, beforehand, etc.) in an image processing system as described herein during a system bootup period. The loading or building of the family of local reshaping function(s) (208) may be performed, before applying the local reshaping operations in combination with denoising operations on each input image (e.g., 202, etc.) in a sequence of consecutive input SDR images into a corresponding HDR image (e.g., 214, etc.) in a sequence of corresponding consecutive output HDR images is performed based at least in part on the family of local reshaping function(s) (208). The family of local reshaping function(s) (208) may, but is not limited to, be generated - e.g., through extrapolation and/or interpolation - from the plurality of basic reshaping functions used to select the global reshaping function (204). Each local reshaping function in the family of local reshaping function(s) (208) may be indexed or identified in whole or in part using a respective reshaping function index value such as an L1-mid value, as in the case of the global reshaping function (204) or each basic reshaping function in the plurality of basic reshaping functions from which the global reshaping function (204) is selected.

As noted, the filtered image generated by applying the multi-level edge-preserving filtering (206) to the input SDR image (202) may be used to generate or estimate the local brightness levels, which may be used in combination of or in reference to the global reshaping function in a predictive model to generate or predict the local reshaping function index values. These local reshaping function index values form indexes of a (pre-denoised) local reshaping function index map 210.

Under techniques as described herein, instead of using the (pre-denoised) local reshaping function index map (210) to look up for pixel-specific local reshaping functions in the family of local reshaping function(s) (208), the index map (210) is first denoised by a denoising block (denoted as "proposed denoising module") 252 to generate a denoised local reshaping function index map 254.

The pixel-specific local reshaping functions looked up by way of indexes (or values thereof) in the denoised local reshaping function index map (254) may be applied to the input SDR image (202) on a per-pixel level by the local reshaping operations (212) to backward reshape SDR codewords in luma and chroma channels into reshaped HDR codewords of the HDR image (214) in luma and chroma channels. Each of these pixel-specific local reshaping functions in the form of a fine-tuned (up to per-pixel precision) non-linear function may be used to enhance local contrast and/or saturation in the HDR image (214).

The denoising block (252) avoids enhancing noises originated in the input SDR image (202) by way of reducing or eliminating noises of the reshaping function index map (210) from the denoised local reshaping function index map (254).

As illustrated in FIG. 2A, the denoising block (252) includes a first processing block 256 for collecting co-occurrence statistics. The first processing block (256) receives the input SDR image (202) and the (pre-denoised) reshaping function index map (210) as input and collects co-occurrence statistics of pixels from the input SDR image (202) as well as co-occurrence statistics of pixels in a binary cluster map representing background and texture areas of the input SDR image (202). The terms binary cluster map and binary cluster mask are used as synonyms both designating what may usually be called binary cluster map.

The denoising block (252) includes a second processing block 258 for denoising reshaping function index maps. The second processing block (258) receives the two co-occurrence statistics from the first processing block (256) as input and uses a combination of the two co-occurrence statistics to smooth the (pre-denoised) reshaping function index map (210) into the denoised reshaping function index map (254). The denoised reshaping function index map (254) can then be used in the local reshaping operations (212) to perform SDR-to-HDR local reshaping and generate the HDR image (214). The smoothing performed by the second processing block (258) of the denoising block (252) serves to reduce noises in the HDR image (214). Additionally, optionally or alternatively, a weight mask may be obtained from standard deviation maps and applied in the smoothing operations to avoid an unintended reduction of enhancement of non-noise image contents in the HDR image (214), which may be caused by overly smoothing the non-noise image contents in the HDR image (214).

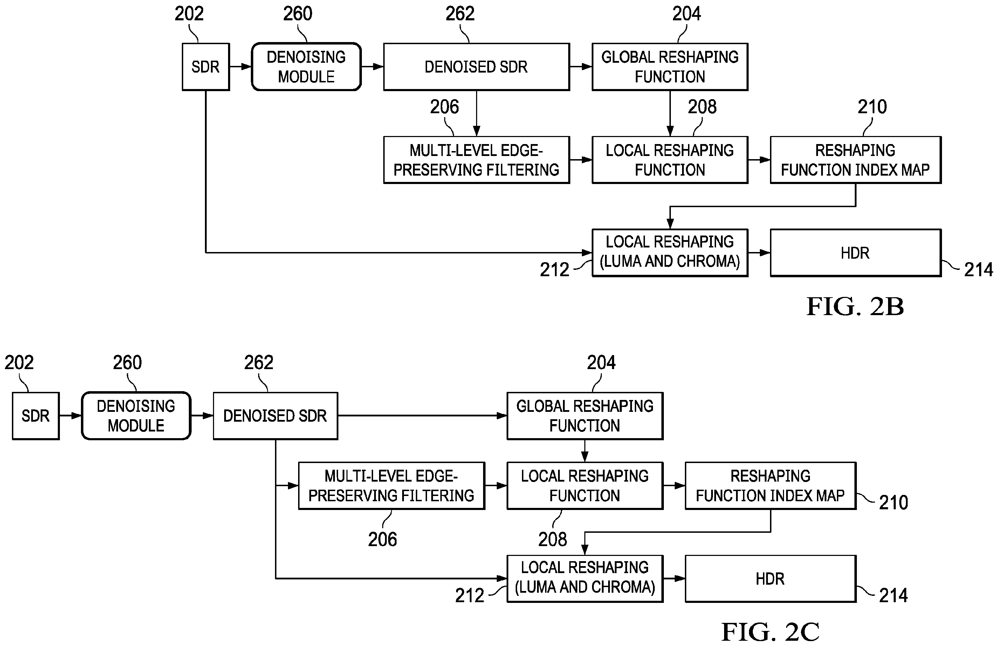

FIG. 2B illustrates a second example flow for applying local reshaping operations (e.g., 212, etc.) to generate corresponding HDR images from denoised SDR images that are in turn derived from input SDR images. An image processing system, a processing block (e.g., 105 of FIG. 1, etc.) therein, may implement or perform this process flow. In some operational scenarios, given an input SDR image 202, a denoised SDR image 262 is derived by a denoising block 260 performing denoising operations on the input SDR image (202). Using the denoised SDR image (262) as input, a global reshaping function 204 is selected to generate a global reshaped HDR image from performing global reshaping on the denoised SDR image (262). The global reshaped HDR image is used to determine or represent the main HDR look for an output HDR image 214 that is to be generated by the local reshaping operations (212) from the input SDR image (202).

To help prevent or reduce common artifacts such as halo artifacts that could be generated from changing local brightness levels adjacent to edges/boundaries of visual objects/characters, high-precision filtering such as multi-level edge-preserving filtering 206 may be applied to the denoised SDR image (262) into a filtered image. The filtered image may be used to derive or estimate local brightness levels (or local region specific brightness levels) in different local regions (up to a per-pixel precision or up to a local region surrounding each pixel) of the input SDR image (202). The estimated local brightness levels in the different local regions (up to a per-pixel precision or up to a local region surrounding each pixel) of the denoised SDR image (262) may be used to estimate or predict local reshaping function index values such as local L1-mid values (up to a per-pixel precision or up to a local region surrounding each pixel) in the HDR image (214). These local reshaping function index values form indexes of a local reshaping function index map 210.

The pixel-specific local reshaping functions looked up by way of indexes (or values thereof) in the local reshaping function index map (210) may be applied to the input SDR image (202) on a per-pixel level by the local reshaping operations (212) to backward reshape input SDR codewords in luma and chroma channels of the input SDR image (202) into reshaped HDR codewords of the HDR image (214) in luma and chroma channels. Each of these pixel-specific local reshaping functions in the form of a fine-tuned (up to per-pixel precision) non-linear function may be used to enhance local contrast and/or saturation in the HDR image (214).

The denoising block (260) avoids enhancing noises originated in the input SDR image (202) by way of reducing or eliminating noises of the input SDR image (202) from the denoised SDR image (262). Additionally, optionally or alternatively, to avoid smoothing out non-noise image contents, a mask may be designed to limit reducing or denoising in only noise affected image contents or in spatial regions - such as highlight or bright regions - in the input SDR image (202).

Additionally, optionally or alternatively, instead of applying the local reshaping operations (212) on the input SDR image (202) as shown in FIG. 2B, in a third example flow for applying local reshaping operations (e.g., 212, etc.) with denoising operations as illustrated in FIG. 2C, the pixel-specific local reshaping functions looked up by way of indexes (or values thereof) in the local reshaping function index map (210) may be applied to the denoised SDR image (262) on a per-pixel level by the local reshaping operations (212) to backward reshape denoised SDR codewords in luma and chroma channels of the denoised SDR image (262) into reshaped HDR codewords of the HDR image (214) in luma and chroma channels.

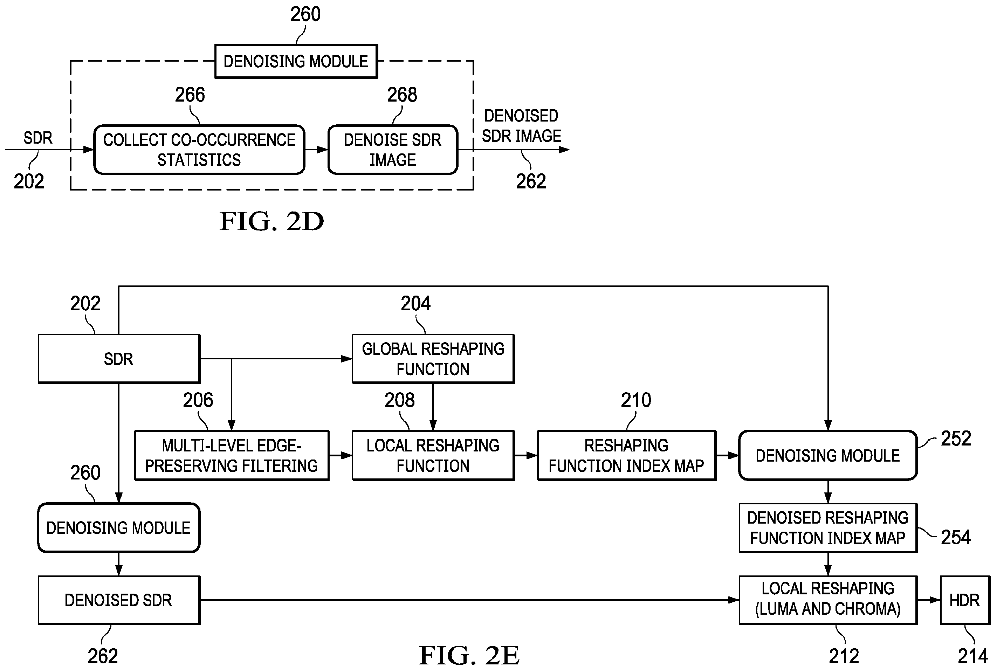

FIG. 2D illustrates example operations performed with the denoising block (260) of FIG. 2B or FIG. 2C. As shown, the denoising block (260) includes a first processing block 266 for collecting co-occurrence statistics. The first processing block (266) receives the input SDR image (202) as input and collects co-occurrence statistics of pixels from the input SDR image (202). The denoising block (260) includes a second processing block 268 for denoising input SDR images. The second processing block (268) receives the co-occurrence statistics from the first processing block (266) as input and uses the co-occurrence statistics to smooth the input SDR image (202) into the denoised SDR image (262). The denoised SDR image (262) can then be used in subsequent operations such as SDR-to-HDR local reshaping to generate the HDR image (214). The smoothing performed by the second processing block (268) of the denoising block (260) serves to reduce noises in the HDR image (214). Additionally, optionally or alternatively, a weight mask may be obtained from standard deviation maps and applied in the smoothing operations to avoid an unintended reduction of enhancement of non-noise image contents in the HDR image (214), which may be caused by overly smoothing the non-noise image contents in the HDR image (214).

FIG. 2E illustrates a fourth example flow for applying local reshaping operations (e.g., 212, etc.) in combination with denoising operations to generate corresponding HDR images from input SDR images. In addition to the processing blocks as illustrated in FIG. 2A for the first example flow, the denoising block (260) is added in this fourth example flow to generate a denoised SDR image from performing denoising operations on the input SDR image (262). In addition, instead of applying the local reshaping operations (212) on the input SDR image (202) as shown in FIG. 2A, in this fourth example flow as illustrated in FIG. 2E, the pixel-specific local reshaping functions looked up by way of indexes (or values thereof) in the local reshaping function index map (210) may be applied to the denoised SDR image (262) on a per-pixel level by the local reshaping operations (212) to backward reshape denoised SDR codewords in luma and chroma channels of the denoised SDR image (262) into reshaped HDR codewords of the HDR image (214) in luma and chroma channels. In the fourth example, relatively strong denoising can be accomplished with both denoising the input SDR image (202) and denoising the (pre-denoised) reshaping function map index (210).

Gathering Cooccurrence Statistics

In some operational scenarios, image smoothing operations can be performed with co-occurrence filters or co-occurrence filtering (CoF). Image smoothing with CoF includes collecting co-occurrence statistics and smooth an image with CoF. Example denoising with CoF can be found in Jevnisek, Roy J., and Shai, Avidan, "Co-occurrence filter," Proceedings of the IEEE Conference on Computer Vision and Pattern Recognition, pp. 3184-3192 (20] 7).

Given an image *I* of single channel, a co-occurrence statistic C(*a, b*) of pixel values *a* and *b* can be obtained as follows:

$$C(a, b) = \sum_{p,q} \exp\left(-\frac{d(p,q)^2}{2 \cdot \sigma^2}\right) [I_p = a][I_q = b] \qquad (1)$$

where *p* and *q* represent locations of two pixels respectively having the pixel values *a* and *b* in *I*; [·] equals 1 if the expression enclosed within is true and equals 0 if the expression is false; $\sigma$ represents standard deviation; d(*p, q*) represents a Euclidean distance between *p* and *q*. When *p* = (*i,j*), *q* = (*v, w*), the Euclidean distance may be given as follows:

$d(p, q) = \sqrt{(i - v)^2 + (j - w)^2}$, where *i* and *j* represent respectively row and column of the pixel location p in a pixel array or image frame; v and w represent respectively row and column of the pixel location q in the pixel array or image frame.

A matrix element of a co-occurrence matrix M may be used to store a co-occurrence statistic of pixel pairs, each of which represents the same pair of pixel values *a* and *b,* as follows:

$$M(a, b) = \frac{C(a,b)}{h(a)h(b)} \tag{2}$$

where $h(a)$ counts the number of pixels with value $a$ in the image; hence, $h(a) = E_p[I_p = a]$. The size of the co-occurrence matrix M is $2^{BS} \times 2^{BS}$, where $B^S$ is the bit depth of the input image $I$ and represents the bit depth of a codeword space comprising all possible codewords in a single channel of a color space in which the image $I$ is represented.

Using the co-occurrence matrix $M$, the input image $I$ of size $H \times W$ can be smoothened to obtain an (output, smoothened) image $J$ as follows:

$$J_p = \frac{\sum_{q \in N(p)} G_{\sigma_s}(p,q) \cdot M(I_p, I_q) \cdot I_q}{\sum_{q \in N(p)} G_{\sigma_s}(p,q) \cdot M(I_p, I_q)} \tag{3}$$

where N(p) represents the neighboring pixel locations of a pixel location p in a (e.g., rectangular, etc.) window or pixel neighborhood. The window may be denoted as $N(p): p = (i, j)$, $N(p) = \{q = (v, w) | \max(0, i - k_s) \leq v < \min(H, i + k_s + 1), \max(0, j - k_s) \leq w < \min(W, j + k_s + 1)\}$, where $k_s$ denotes the half window size of the window or pixel neighborhood. In expression (3) above, $G_{\sigma_s}(p, q) = exp\left(-\frac{d(p,q)^2}{2 \cdot \sigma_s^2}\right)$, where $\sigma_s$ represents the standard deviation.

By way of illustration only, for a full high-definition or HD (1920 $\times$ 1080) input image $I$, an example standard deviation may be ($\sigma_s$ = 10, and an example half window size may be $k_s = ceil(\sigma_s)$ = 10. For an input image with the same content but a different size, the standard deviation could be set to be proportional to the image size.

Co-occurrence filtering can be compared with bilateral filtering in TABLE 1 below. In the bilateral filtering, a term $exp\left(-\frac{|I_p - I_q|^2}{2 \cdot \sigma_{color}^2}\right)$ decides or controls (e.g., filtering strength, etc.) whether pixels at p and q should be smoothed together, and is used to preserve sharp edges in the filtered image. By way of comparison, co-occurrence filtering shares the same Gaussian term $G_{\sigma_s}(p, q)$, and uses co-occurrence statistic $M(I_p, I_q)$ to decide or controls (e.g., filtering strength, etc.) whether the pixels at p and q should be smoothed together. Unlike the bilateral filtering, the co-occurrence filtering can smooth pixels with very different pixel values that co-occur relatively frequently.

TABLE 1

| Linear filter | Bilateral filter | Co-occurrence filter |
|---|---|---|
| $J_p = \frac{\sum_{q \in N(p)} w(p, q) \cdot I_q}{\sum_{q \in N(p)} w(p, q)}$ | $w(p, q) = G_{\sigma_s}(p, q) \cdot exp\left(-\frac{|I_p - I_q|^2}{2 \cdot \sigma_{color}^2}\right)$ | $w(p, q) = G_{\sigma_s}(p, q) \cdot M(I_p, I_q)$ |

An example procedures for computing or collecting co-occurrence statistics with a sliding window is illustrated in TABLE 2 below.

TABLE 2

| |
|---|
| Obtain co-occurrence statistic of an image |
| Input: input image $I$ of size $H \times W$, half window size $k$, standard deviation $\sigma$ |
| Output: co-occurrence matrix $M$ |
| // time complexity: $O(WHk^2)$ |
| |
| // Initialization: $C$ and $M$ are matrix of size H$\times$ $W$ with elements of 0 |
| $C = zeros(H,W)$ |

```
M = zeros(H,W)

for (i = 0; i < H; i + +) {
    for (j = 0; j < W; j + +) {
        a = I(i,j)
        h(a) + +
        for (v = max (0, i − k); v < min (H, i + k + 1); v + +){
            for (w = max (0, j − k); w < min (W, j + k + 1); w + +){
                b = I(v,w)
                C(a,b) = C(a,b) + exp (− d(((i,j),(v,w))²) / (2·σ²))
            }
        }
    }
}

for (m = 0; m < 2^{B^S};m++) {  // M has the size of 2^{B^S} × 2^{B^S}
    for (n = 0; n < 2^{B^S}; n++) {
        M(m,n) = C(m,n) / (h(m) h(n) + eps)  \\eps = 2^{−52}
    }
}
return M
```

An example procedures for smoothing an input image with CoF is illustrated in TABLE 3 below. Boundaries in the input image can be relatively well preserved in the smoothened image, with pixels of relatively frequently co-occurring pixel values can be relatively strongly smoothened.

TABLE 3

Smooth an image with CoF
Input: input image $I$ of size $H \times W$, half window size $k_s$, standard deviation $\sigma_s$, co-occurrence matrix $M$
Output: filtered image $J$
// time complexity: $O(WHk_s^2)$

// Initialization:
$S = zeros(H, W)$
$Q = zeros(H, W)$
$J = zeros(H, W)$

```
for (i = 0; i < H; i++) {
    for (j = 0; j < W; j++) {
        a = I(i, j)
```

```
        for (v = max(0, i − k_s); v < min(H, i + k_s + 1); v++) {
            for (w = max(0, j − k_s); w < min(W, j + k_s + 1); w++) {
                b = I(v, w)
```

$$S(i,j) = S(i,j) + \exp\left(-\frac{d((i,j),(v,w))^2}{2 \cdot \sigma_s^2}\right) \cdot M(a,b) \cdot I(v,w)$$

$$Q(i,j) = Q(i,j) + \exp\left(-\frac{d((i,j),(v,w))^2}{2 \cdot \sigma_s^2}\right) \cdot M(a,b)$$

```
            }
        }
```

$$J(i,j) = \frac{S(i,j)}{Q(i,j)+eps} \quad \backslash\backslash eps = 2^{-52}$$

```
    }
}
return J
```

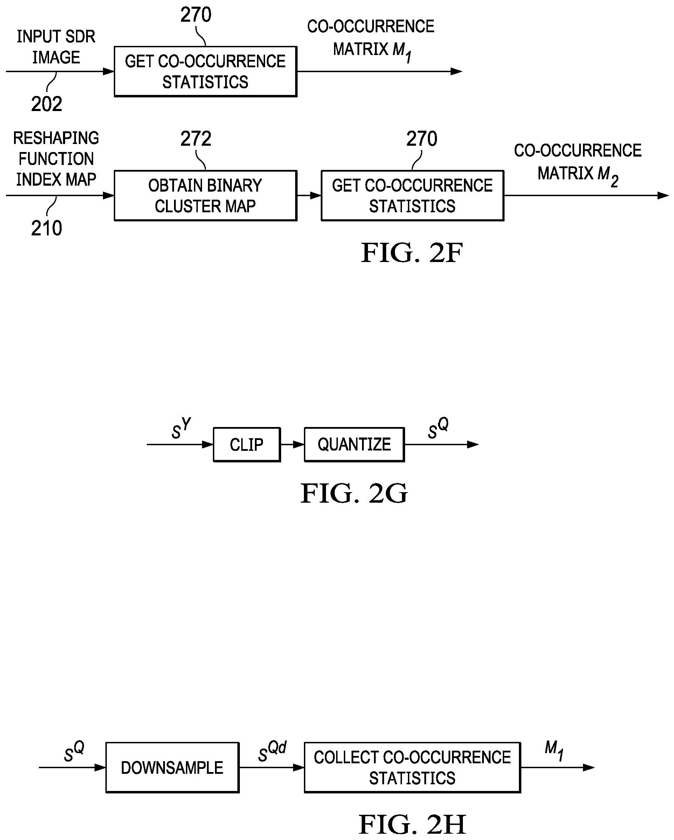

FIG. 2F illustrates example operations for collecting co-occurrence statistics for denoising operations as described herein. As shown, a first instance of a processing block 270 may receive an input SDR image 202 and collect/get co-occurrence statistics of pixels in the input SDR image (202). The co-occurrence statistics of pixels in the input SDR image (202) may be stored or collected in a first co-occurrence matrix denoted as $M_1$.

Additionally, optionally or alternatively, a processing block 272 may receive a reshaping function index map 210 and generate or obtain a binary cluster map from the reshaping function index map (210). The binary cluster map demarcates, partitions or divides the reshaping function index map (210) into background and texture areas. co-occurrence statistics of pixels in the input SDR image (202). A second instance of the processing block (270) collects/get co-occurrence statistics of clusters of the binary cluster map. The co-occurrence statistics of clusters of the binary cluster map may be stored or collected in a second co-occurrence matrix denoted as $M_2$.

In some operational scenarios, co-occurrence statistics of an input SDR image (e.g., 202 of FIG. 2A through FIG. 2C and FIG. 2E, etc.) may be collected and used to determine or control (e.g., filtering strength, etc.) whether and how pixel values or index values of pixel locations in a corresponding reshaping function index map are to be smoothened. By way of comparison, co-occurrence statistics of the reshaping function index map may not be collected and may not be used to determine or control (e.g., filtering strength, etc.) whether and how pixel values or index values of pixel locations in the corresponding reshaping function index map are to be smoothened. This is because similar pixel or index values at pixel locations of the reshaping function index map can correspond to very different pixel values at the same pixel locations of the input SDR image. Hence, co-occurrence statistics of pixel or index values may be inaccurate for determining or controlling (e.g., filtering strength, etc.) whether and how pixel values or index values of pixel locations in the reshaping function index map are to be smoothened.

For the purpose of illustration only, an input (e.g., YCbCr, SDR, etc.) image may be an image with a bit depth of 8 in each channel of a color space in which the input image is represented. As the total number of possible values in a codeword space of the bit depth of 8 in each channel of a three-channel color space such as the (e.g., YCbCr, RGB, etc.) color space is $256^3$, the size or dimensions of a co-occurrence matrix M for all pixel value pairs amount to $256^3 \times 256^3$. This size might be too large to be used in practice due to relatively high memory consumptions and computational costs. Also, for a particular pixel value pair $(a, b)$, there may not be a sufficient number of pixels to obtain or collect a co-occurrence statistic of $(a, b)$ with a relatively high confidence level.

In some operational scenarios, the input image of 8 bits per channel may be quantized to help ensure relatively low memory usage, relatively high computational efficiency and a relatively sufficient number of pixels for each pixel value pair. The input image as quantized may then be used to collect co-occurrence statistics.

A possible method to quantize the input image may be to apply K-means based clustering among pixel values in the input image. However, this method could still be time consuming.

In some operational scenarios, a more computationally effective or efficient quantization method that K-means may be applied or implemented. As illustrated in FIG. 2G, a single-channel image $S^Y$ comprising luma or Y channel codewords of the input image denoted as $S$ may be clipped and quantized. For example, the 5-th and 95-th percentiles (denoted as $a$ and b) of the luma or Y channel codewords in the single-channel image $S^Y$ (excluding letterbox pixels in letterbox as will be discussed in detail later) may be identified for the single-channel image $S^Y$. As used herein, the term "letterbox" may refer to one or more of: padded dark, monochromatic, colored, or white areas of arbitrary shape, such as rectangles, letterboxes, pillar-boxes, ovals, or the like, or non-active (static) regions of arbitrary shape, such as letterboxes, pillar-boxes, ovals, or other shapes. The pixels values (or luma/Y codewords) in the single-channel image $S^Y$ may be clipped with these percentiles $a$ and b as lower and upper bounds to obtain a clipped single-channel image denoted as $S^{Yc}$ as follows:

$$S^{Yc} = clip3(S^Y, a, b) \tag{4}$$

The clipped single-channel image $S^{Yc}$ can be further quantized into nBins= 8 uniform intervals to generate a quantized clipped single-channel image denoted as $S^Q$ as follows:

$$S^Q = floor\left(\frac{S^{Yc} - a}{\frac{b-a}{\text{nBins}} + \epsilon}\right) \tag{5}$$

where a regularization term (or eps) $\varepsilon = 10^{-4}$ is used to prevent division by zero (0). The number of intervals nBins can be selected or set (e.g., to eight, to a different number, etc.) to ensure both a relatively fast processing speed and relatively high denoising quality. A smaller number of intervals may result in faster processing but may be more likely to cause (e.g., relatively small, etc.) edges in the image to be blurred.

After obtaining the quantized clipped single-channel image $S^Q$ from the clipped single-channel image $S^{Yc}$, co-occurrence statistics may be collected from $S^Q$. In some operational scenarios, a region of interest map P (e.g., complementary to a letterbox probability map, a surround area probability map, etc.) may be used to exclude the effect of pixels in any letterbox area that may be present in the input image. Example letterbox probability map or surround area probability map can be found in U.S. Provisional Patent Application Ser. No. 63/209,602, filed on June 11, 2021, by T-W Huang and G-M Su. Accordingly, expressions (1) and (2) may be modified or adjusted with the region of interest map P as follows:

$$C_1(a, b) = \sum_{p,q} \exp\left(-\frac{d(p,q)^2}{2 \cdot \sigma^2}\right)\left[S_p^Q = a\right]\left[S_q^Q = b\right]P(q) \tag{6}$$

$$M_1(a, b) = \frac{C_1(a,b)}{h_1(a)h_1(b)} \tag{7}$$

With a quantization level corresponding to nBins being 8, the co-occurrence matrix $M_1$ is of size $8 \times 8$. As noted, $\sigma$ may be selected or set to be an example value of 10, and the half window size k may be selected or set to be an example value of 10 for a full HD (1920 × 1080) input image. For different input image sizes, $\sigma$ and k can be selected or set to be proportional to or scale with the image sizes.

In some operational scenarios, as illustrated in FIG. 2H, the quantized image $S^Q$ may be downsampled to accelerate collecting the co-occurrence statistics. For example, the quantized image $S^Q$ of size $H \times W$ may be down-sampled by choosing one pixel from every D pixels (or a downsampling factor) in each row and each column, resulting in a downsampled image $S^{Qd}$ of size $\frac{H}{D} \times \frac{W}{D}$. In a non-limiting example, the downsampling factor D = 4 may be selected or set to accelerate collecting the co-occurrence as well as avoiding distortions in the co-occurrence statistics. The region of interest map P may be similarly downsampled with the same downsampling factor to obtain a downsample letter box probability $P^d$ (or a corresponding downsampled complementary surround area probability map). The co-occurrence matrix $M_1$ may be obtained to store co-occurrence statistics as follows:

$$C_1(a, b) = \sum_{p,q} \exp\left(-\frac{d(p,q)^2}{2 \cdot \sigma_d^2}\right) [S_p^{Qd} = a][S_q^{Qd} = b]P^d(q) \qquad (8)$$

$$M_1(a, b) = \frac{C_1(a,b)}{h_1^d(a)h_1^d(b)} \qquad (9)$$

where $h_1^d(a)$ calculates or counts the total number of pixels of value *a* in the downsampled image $S^{Qd}$. With the image downsampled, standard deviation and half window size may be downsampled such that $\sigma_d = \frac{10}{D} = 2.5$, $k_a = ceil((\sigma_d) = $ 3. In some operational scenarios, to achieve a relatively fast speed in practice, image downsampling can be applied to the single channel image $S^Y$ first and then followed by pixel value quantization to obtain $S^{Qd}$.

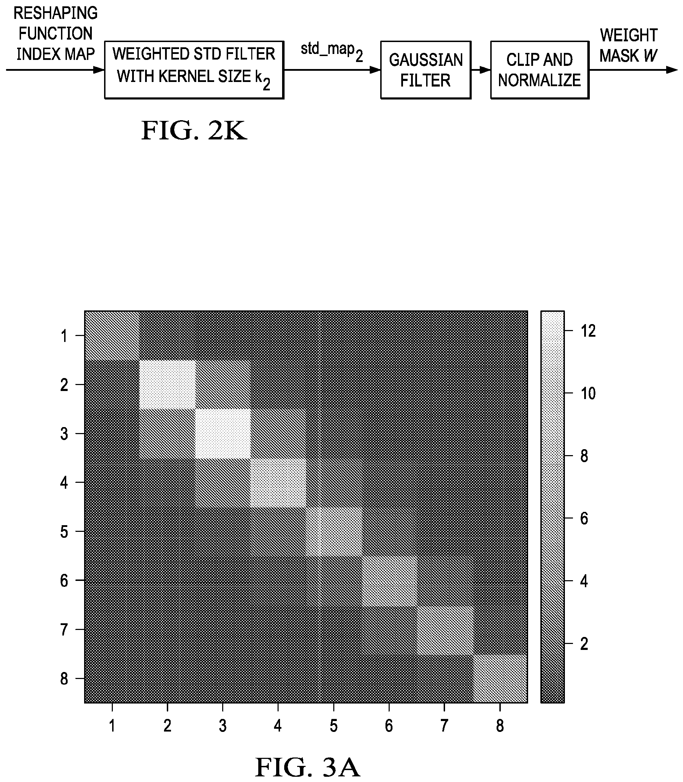

FIG. 3A illustrates an example co-occurrence matrix $M_1$ of size 8 × 8 computed from a quantized downsampled single-channel image generated from an input image. As shown, elements along or near the diagonal of the matrix are of relatively large values indicating a relatively strong co-occurrence between like pixel values, while elements off or away from the diagonal of the matrix are of relatively small values indicating a relatively weak co-occurrence between pixel values of relatively large differences.

In some operational scenarios, co-occurrence statistics may be collected from clusters identified in a reshaping function index map to prevent or reduce smoothing in texture areas of an input image or to help limit or confine smoothing within background areas of the input image, even if co-occurrence statistics in texture areas in the reshaping function index map may be relatively large. The reshaping function index map may be partitioned or divided into a binary map K with two clusters: one cluster for background areas and the other cluster for texture areas. The binary map K can be used to help restrict or confine smoothing operations to be performed on pixels within background areas provided that co-occurrence statistics from these background areas of the input image are relatively large. In the meantime, the binary map K can be used to help avoid smoothing with pixels within texture areas even when co-occurrence statistics from these texture areas of the input image happened to be relatively large. Additionally, optionally or alternatively, a weight mask can be further used to avoid smoothing texture areas of the input image, as will be further explained in detail later.

Local standard deviation, such as from weighted standard deviation filtering, may be used to determine whether a pixel belongs to background areas or texture areas, as the standard deviation of pixel values in the background areas are relatively small as compared with that of pixel values in the texture areas.

A standard deviation map (or std map) can be obtained for an input image using a standard deviation filter. Given a location of a pixel, pixel values in a pixel patch or neighborhood around the pixel may be denoted as $X = \{x_1, \ldots, x_N\}$, where $x_i$ is *i-th* pixel value. A variance $Var(X)$ of these pixel values of patch X can be obtained, as follows:

$$Var(X) = E[X^2] - E[X]^2 = \frac{\sum_{i=1}^N x_i^2}{N} - \left(\frac{\sum_{i=1}^N x_i}{N}\right)^2 \qquad (10)$$

However, when a letterbox is present in the input image, (local) variances at boundaries of the letterbox present in the input image can be relatively large. Weighted standard filtering may be performed to obtain local variances and/or local standard deviations in different pixel locations of the input image. For example, a local variance $Var'(X)$ of the pixel values of patch X can be obtained, instead of expression (10) above, as follows:

$$Var'(X) = \frac{\sum_{i=1}^N w_i x_i^2}{\sum_{i=1}^N w_i} - \left(\frac{\sum_{i=1}^N w_i x_i}{\sum_{i=1}^N w_i}\right)^2 \qquad (11)$$

where an individual weighting factor $w_i \in [0,1]$ for each pixel value $x_i$ can be obtained from the region of interest map P. An example procedure for calculating the local variance with weighted standard deviation filtering is illustrated in TABLE 4 below.

TABLE 4

```
Obtain weighted std map
Input: kernel size k_w, input image I of size H × W, region of interest map P of size
H × W
Output: weighted std map J

// Initialization:
J = zeros(H, W)
// function mean_filter(I, k_w) returns the filtered image of I using a mean filter of size
// k_w × k_w
P = double(P == 1)  // directly using P may cause blurring at the boundary
                    // "P == 1" converts any P value less than one (1) to a binary
                    // value of zero (0) and to 1 only if P is one (1)
                    // resultant binary values are then converted into floating
                    // values
meanI_weighted = mean_filter(I .* P, k_w);
meanW = mean_filter(P, k_w);
corrI_weighted = mean_filter(P .* I .* I, k_w);
for (i = 0; i < H; i + +) {
    for (j = 0; j < W; j + +) {
        if meanW(i, j) == 0 || P(i, j) < 1
            continue
        else
```

$$J(i,j) = \frac{\text{corrI\_weighted}(i,j)}{\text{meanW}(i,j)} - \left(\frac{\text{meanI\_weighted}(i,j)}{\text{meanW}(i,j)}\right)^2;$$

```
        if J(i, j) < 0
            J(i, j) = 0
        else
```

$$J(i,j) = \sqrt{J(i,j)}$$

```
    }
}

return J
```

A small (spatial filtering) kernel size of the weighted standard deviation filtering can result in a variance or standard deviation map with finer details such as edges. A large kernel size can result in a more blurred variance or standard deviation map.

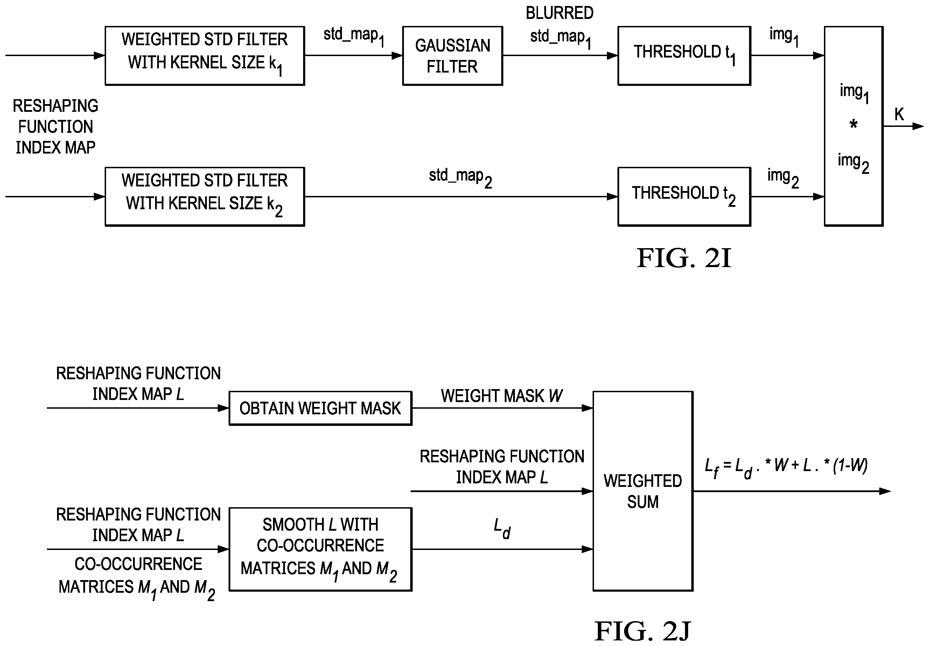

FIG. 2I illustrates an example processing flow for obtaining the binary cluster map K from standard deviation maps that are in turn derived from the reshaping function index map. Weighted standard deviation filtering may be applied to the reshaping function index map with two different kernel sizes such as $k_1 = 3$ and $k_2 = 51$ to derive two standard deviation maps denoted as std_map$_1$ and std_map$_2$, respectively. Weighted standard deviation filtering with the smaller kernel size can be used to detect or preserve edges in the reshaping function index map in the resultant standard deviation map std_map$_1$, which can be further applied with a Gaussian filter with using a standard deviation such as $\sigma_b$ (with a value of 3, 4, 5, etc.) to generate a blurred std_map$_1$. Both the blurred std_map$_1$ and the (unblurred) std_map$_2$ can be compared with thresholds (or thresholded) separately with $t_1$ (with a value of 18, 20, 22, etc.), $t_2$ (with a value of 65, 70, 75, 80, etc.) to obtain two binary maps as follows:

$$\text{img}_1 = \text{blurred std\_map}_1 < t_1 \qquad\qquad (12\text{-}1)$$

$$\text{img}_2 = \text{std\_map}_2 < t_2 \qquad (12\text{-}2)$$

Both binary maps $\text{img}_1$ and $\text{img}_2$ can be combined or multiplied together to obtain the binary cluster map K as follows:

$$K = \text{img}_1 .* \text{img}_2 \qquad (13)$$

A pixel location may be determined to be in the background areas if the pixel location is in the background areas in both binary maps $\text{img}_1$ and $\text{img}_2$. These parameters used for thresholds, kernels, standard deviations for blurring, etc., can be selected empirically to be different for different spatial resolution video frames.

A second co-occurrence matrix can be used with the region of interest map P (or the corresponding surround area probability map) to generate and store co-occurrence statistics of the binary cluster map K, as follows:

$$C_2(a,b) = \sum_{p,q} \exp\left(-\frac{d(p,q)^2}{2\cdot\sigma^2}\right)[K_p = a][K_q = b]P(q) \qquad (14)$$

$$M_2(a,b) = \frac{C_2(a,b)}{h_2(a)h_2(b)} \qquad (15)$$

In some operational scenarios, a downsampled binary cluster map may be generated from downsampling the binary cluster map K and used to collect the co-occurrence statistics into the second co-occurrence matrix $M_2$.

Example co-occurrence statistics from the binary cluster map K is illustrated in TABLE 5 below. As shown, the co-occurrence statistic $C(1, 1)$ for the background areas is relatively large, which can help smooth pixel values in the background areas. The second co-occurrence matrix $M_2$ with size $2 \times 2$ can be combined with the (first) co-occurrence matrix $M_1$ to denoise the reshaping function index map, as will be further explained in detail later.

TABLE 5

| | |
|---|---|
| 0.823 | 0.023 |
| 0.023 | 0.13 |

Co-occurrence Filtering and Denoising

FIG. 2J illustrates example denoising reshaping function index maps with co-occurrence statistics. A weight mask W is generated or obtained from a (pre-denoised) reshaping function index map denoted as L to help confine denoising in background areas and help preserve enhancement from local reshaping in texture areas. The reshaping function index map L is smoothened with pre-calculated co-occurrence matrices $M_1$ and $M_2$ to generate an intermediate denoised reshaping function index map denoted as $L_d$. A final denoised reshaping function index map denoted as $L_f$ may be generated as a weighted sum of the (pre-denoised) reshaping function index map L and the intermediate denoised reshaping function index map $L_d$ using weight elements (or weighting factors) specified within the weight mask, as follows:

$$L_f = L_d .* W + L .* (1 - W) \qquad (16)$$

where an operator denoted as ".*" represents a pixel-wise multiplication operation between a first factor before the operator and a second factor after the operator. More specifically, a final reshaping function index value at a specific pixel location in a plurality of pixel locations of the final denoised reshaping function index map $L_f$ is a weighted sum of a (pre-denoised) reshaping function index value at the specific pixel location in a corresponding plurality of pixel locations of the (pre-denoised) reshaping function index map L and an intermediate reshaping function index value at the specific pixel location in a corresponding plurality of pixel locations of the intermediate denoised reshaping function index map $L_d$ using a weight element (or weighting factor) at the specific pixel location in a corresponding plurality of pixel locations of the weight mask W.

FIG. 2K illustrates an example process flow for generating the weight mask W. The co-occurrence statistics collected in the second co-occurrence matrix $M_2$ from the binary cluster map K of the reshaping function index map L may have a relatively large co-occurrence statistical value, which, if used without the weight mask W, may cause pixels or pixel values in the texture areas to be smoothened like pixels or pixel values in background areas, thereby causing undesired blurring of image details depicted in the texture areas and reducing/counteracting desired enhancement of the image details by way of local reshaping operations.

The weight mask W may be used to preserve the image details or desired enhancement thereof in the texture areas. A (e.g., weighted, etc.) variance or standard deviation map of the reshaping function index map L may be generated with (e.g., weighted, etc.) standard deviation filtering and used to obtain the wight mask W. As the texture areas have relatively large spatial frequency visual content, the variance or standard deviation map has relatively large values in the texture areas.

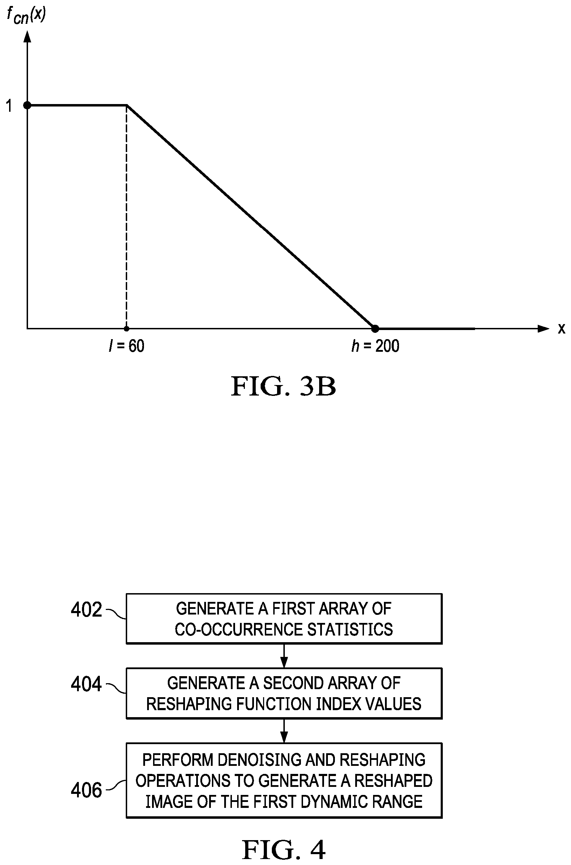

In a non-limiting example as illustrated in FIG. 2K as well as FIG. 2I, weighted standard deviation filtering may be applied to the reshaping function index map with a kernel size such as $k_2 = 51$ to derive the standard deviation map std_map$_2$, which may be blurred with a Gaussian filter of a standard deviation such as $\sigma_0 = 5$. As illustrated in FIG. 3B, the blurred standard deviation map may be clipped to lower and upper bounds [l, h]. Clipped values within the lower and upper bounds [l, h] can then be normalized to a normalization value range such as [0, 1] to obtain the (final) weight mask W. Example reshaping function index value range may be some or all of a value range [0,4095]. The lower and upper bound [l, h] may be chosen empirically and may be any of: [60, 200], [50, 210], [40, 220], etc. The clipping and normalization operations may be equivalent to applying a function $f_{cn}$ to each pixel in the blurred standard deviation map, as follows:

$$f_{cn}(x) = \begin{cases} 1, & x \leq l \\ 1 - \frac{x-l}{h-l}, & l < x \leq h \\ 0, & x > h \end{cases} \qquad (17)$$

An example procedure for generating the weight mask W using the clipping and normalization operations on the blurred standard deviation map is illustrated in TABLE 6 below.

TABLE 6

Clip and normalize
Input: the blurred std map $I$ of size $H \times W$, clip interval $[l, h]$
Output: weight mask $W$
if $l == h$
   return zeros$(H, W)$

$I = clip3(I, l, h)$
$W = 1 - \frac{(I-l)}{h-l}$ //normalize to [0,1]  // weight element is larger when blurred standard
                                // deviation value is smaller

return $W$

For a pixel location likely to be in the texture area, a blurred standard deviation at the pixel location is likely to be relatively large. Correspondingly, a weight element for the pixel location in the weight mask W is likely to be relatively small, and the final reshaping function index value for the pixel location in the final denoised reshaping function index map $L_f$ is contributed more from the original (pre-denoised) reshaping function index map L than from the intermediate denoised reshaping function index map $L_d$. As a result, enhancements of the texture areas from local reshaping operations as specified in the original reshaping function index map can be better preserved and less affected by smoothing operations than otherwise.

As depicted in FIG. 2J, the intermediate denoised reshaping function index map $L_d$ can be generated by smoothening the (pre-denoised) reshaping function index map L with the co-occurrence matrixes $M_1$ and $M_2$. By way of illustration but not limitation, in an example, averages of co-occurrence values in the co-occurrence matrixes $M_1$ and $M_2$ can be taken as final co-occurrence values, as follows:

$$M(I_p, I_q) = [M_1(S_p^Q, S_q^Q) + M_2(K_p, K_q)]/2 \qquad (18)$$

An alternative is to take minimums of $M_1(S_p^Q, S_q^Q)$ and $M_2(K_p, K_q)$ as the final co-occurrence values, instead of the averages. In this example, a pixel pair p and q tends to be smoothened together with co-occurrence filtering when both co-occurrence statistical values in the co-occurrence matrixes $M_1$ and $M_2$ are relatively large.

The final co-occurrence values as combined from the co-occurrence matrixes $M_1$ and $M_2$ can be used to denoise the (pre-denoised) reshaping function index map L as follows:

$$L_{d_p} = \frac{\sum_{q \in N(p)} G_{\sigma_s}(p,q) \cdot \left[M_1\left(S_p^Q, S_q^Q\right) + M_2\left(K_p, K_q\right)\right] \cdot L_q}{\sum_{q \in N(p)} G_{\sigma_s}(p,q) \cdot \left[M_1\left(S_p^Q, S_q^Q\right) + M_2\left(K_p, K_q\right)\right]} \tag{19}$$

where the standard deviation $\sigma_s$ may be set to be an example vlaue such as 10; the half window size $k_s$ may be set to an example value such as 10 by for a full HD (1920×1080) input image. For an image which is not full HD, the standard deviation $\sigma_s$ may be set to be scaled proportionally to image size.

A relatively large value for the standard deviation $\sigma_s$ may cause filtered images to be relatively smooth. While the denoising result in background areas may be visually better, texture areas may be more blurred.

An example procedure for denoising the reshaping function index map is illustrated in TABLE 7 below.

TABLE 7

Smooth reshaping function index map $L$ with co-occurrence matrices $M_1$ and $M_2$
Input: input reshaping function index map $L$ of size $H \times W$, half window size $k_s$,
standard deviation $\sigma_s$, co-occurrence matrices $M_1$ and $M_2$, quantized Y-channel of
input SDR image $S^Q$, cluster map $K$.
Output: filtered image $L_d$
//
// Initialization:
$S_1 = zeros(H, W)$
$Q_1 = zeros(H, W)$
$S_2 = zeros(H, W)$
$Q_2 = zeros(H, W)$
$L_d = zeros(H, W)$

```
for (i = 0; i < H; i + +) {
    for (j = 0; j < W; j + +) {
        a = S^Q(i, j)
        a_2 = K(i, j)
        for (v = max (0, i − k_s); v < min (H, i + k_s + 1); v + +){
            for (w = max (0, j − k_s); w < min (W, j + k_s + 1); w + +){
```

$$b = S^Q(v,w)$$

$$S_1(i,j) \mathrel{+}= \exp\left(-\frac{d((i,j),(v,w))^2}{2\cdot\sigma_s^2}\right) \cdot M_1(a,b) \cdot L(v,w)$$

$$Q_1(i,j) \mathrel{+}= \exp\left(-\frac{d((i,j),(v,w))^2}{2\cdot\sigma_s^2}\right) \cdot M_1(a,b)$$

$$b_2 = K(v,w)$$

$$S_2(i,j) \mathrel{+}= \exp\left(-\frac{d((i,j),(v,w))^2}{2\cdot\sigma_s^2}\right) \cdot M_2(a_2,b_2) \cdot L(v,w)$$

$$Q_2(i,j) \mathrel{+}= \exp\left(-\frac{d((i,j),(v,w))^2}{2\cdot\sigma_s^2}\right) \cdot M_2(a_2,b_2)$$

$$\}$$
$$\}$$

$$L_d(i,j) = \frac{S_1(i,j)+S_2(i,j)}{Q_1(i,j)+Q_2(i,j)+eps} \ \backslash\backslash eps = 2^{-52}$$

$$\}$$
$$\}$$

return $L_d$

Denoising the reshaping function index map may be accelerated with downsampling. For example, one pixel every $D_s$ pixels (or downsampling factor) in the row and column of the reshaping function index map may be selected or used for carrying out computations relating to denoising operations. In a non-limiting example, the downsampling factor $D_s$ = 4 may be selected or set to achieve fast processing speed while preserving visual quality of the output image (e.g., 214 of FIG. 2A through FIG. 2A through FIG. 2C and FIG. 2E, etc.). At a pixel location p, an index value in the intermediate smoothed or (denoised) function index map $L_d$ can be computed as follows:

$$L_{d_p} = \frac{\sum_{q \in N^d(p)} G_{\sigma_s}(p,q)\cdot\left[M_1\left(S_p^Q,S_q^Q\right)+M_2\left(K_p,K_q\right)\right]\cdot L_q}{\sum_{q \in N^d(p)} G_{\sigma_s}(p,q)\cdot\left[M_1\left(S_p^Q,S_q^Q\right)+M_2\left(K_p,K_q\right)\right]} \tag{20}$$

where $N^d(p)$ represents neighboring pixel locations of $p$ in a pixel neighborhood in which only one pixel every $D_s$ pixels in the row and column is selected or used for co-occurrence filtering. Meanwhile, the standard deviation $\sigma_s$ in the Gaussian filter may remain the same as the standard deviation without downsampling, e.g., $\sigma_s$ = 10, etc.

An example procedure for denoising the reshaping function index map with downsampling is illustrated in TABLE 8 below.

TABLE 8

| Smooth reshaping function index map $L$ with downsampling |
| --- |

Input: input reshaping function index map $L$ of size $H \times W$, half window size $k_s$, standard deviation $\sigma_s$, co-occurrence matrices $M_1$ and $M_2$, quantized Y-channel of input SDR image $S^Q$, cluster map $K$, downsample factor $D_s$.

Output: filtered image $L_d$

```
//
```

$$S_1 = zeros(H, W)$$
$$Q_1 = zeros(H, W)$$
$$S_2 = zeros(H, W)$$
$$Q_2 = zeros(H, W)$$
$$L_d = zeros(H, W)$$

for $(i = 0; i < H; i + +)$ {

    for $(j = 0; j < W; j + +)$ {

        $a = S^Q(i, j)$

        $a_2 = K(i, j)$

        for $\left(v = \max\left(0, i - floor\left(\frac{k_s}{D_s}\right) * D_s\right); v < \min(H, i + k_s + 1); v = v + D_s\right)$ {

            for $\left(w = \max\left(0, j - floor\left(\frac{k_s}{D_s}\right) * D_s\right); w < \min(W, j + k_s + 1); w = w + D_s\right)$ {

                $b = S^Q(v, w)$

                $S_1(i, j) \mathrel{+}= \exp\left(-\frac{d((i,j),(v,w))^2}{2 \cdot \sigma_s^2}\right) \cdot M_1(a, b) \cdot L(v, w)$

                $Q_1(i, j) \mathrel{+}= \exp\left(-\frac{d((i,j),(v,w))^2}{2 \cdot \sigma_s^2}\right) \cdot M_1(a, b)$

                $b_2 = K(v, w)$

                $S_2(i, j) \mathrel{+}= \exp\left(-\frac{d((i,j),(v,w))^2}{2 \cdot \sigma_s^2}\right) \cdot M_2(a_2, b_2) \cdot L(v, w)$

                $Q_2(i, j) \mathrel{+}= \exp\left(-\frac{d((i,j),(v,w))^2}{2 \cdot \sigma_s^2}\right) \cdot M_2(a_2, b_2)$

           }

        }

        $L_d(i, j) = \frac{S_1(i,j) + S_2(i,j)}{Q_1(i,j) + Q_2(i,j) + eps}$

    }

}

return $L_d$

In some operational scenarios, linear segment-based structures may be used in denoising for local reshaping. Example linear segment-based structures are described in U.S. Patent 10,397,576, "Reshaping curve optimization in HDR coding," by H. Kadu and G-M. Su.

Some or all techniques as described herein can be implemented and/or performed as parts of real time operation for broadcast video applications, real time streaming applications, etc. Additionally, optionally or alternatively, some or all techniques as described herein can be implemented and/or performed as parts of time-delay or offline operation for non-real time streaming applications, cinema applications, etc.

Example Process Flows

FIG. 4 illustrates an example process flow for generating images of a first dynamic range from input images of a second dynamic range lower than the first dynamic range according to an embodiment. In some embodiments, one or more computing devices or components (e.g., an encoding device/module, a transcoding device/module, a decoding device/module, an inverse tone mapping device/module, a tone mapping device/module, a media device/module, a reverse mapping generation and application system, etc.) may perform this process flow. In block 402, an image processing system generates a first array of co-occurrence statistics in connection with an input image of the second dynamic range

In block 404, the image processing system generates a second array of reshaping function index values for selecting reshaping functions from among a plurality of candidate reshaping functions.

In block 406, the image processing system performs (a) denoising operations based at least in part on the first array of co-occurrence statistics and (b) reshaping operations based at least in part on the second array of reshaping function index values to generate a reshaped image of the first dynamic range.

In an embodiment, the second array of reshaping function index values represents an array of denoised reshaping function index values generated by the denoising operations performed on a third array of pre-denoised reshaping function index values.

In an embodiment, the first array of co-occurrence statistics is a combination of a fourth array of co-occurrence statistics collected from a binary cluster mask derived from the third array of pre-denoised reshaping function index values and a fifth array of co-occurrence statistics collected from a clipped and quantized image derived from the input image. The first array of co-occurrence statistics being a combination of a fourth array of co-occurrence statistics and a fifth array of co-occurrence statistics means that the first array of co-occurrence statistics comprises the fourth array and the fifth array. The fourth and fifth array are not added to together into a single array. In an example, using different words one could also say that for an input image of the second dynamic range, first a pre-denoised reshaping function index map (third array) is calculated. Then the pre-denoised reshaping function map (third array) is used to calculate a binary cluster map and then the co-occurrence statistics (fourth array) of the binary cluster map is calculated. On the other hand, the input image is clipped and quantized and the co-occurrence statistics (fifth array) is calculated. Then both co-occurrence statistics (fourth array and fifth array) are combined to form the combined co-occurrence statistics (first array). Then, the combined co-occurrence statistics (first array) is used to denoise the pre-denoised reshaping function index map (third array) to get the denoised reshaping function index map (second array), which is then used to generate a reshaped image of the first dynamic range.

In an embodiment, the binary cluster mask is generated from applying standard deviation filtering on the third array of pre-denoised reshaping function index values.

In an embodiment, the standard deviation filtering is applied with at least two different spatial filtering kernel sizes on the third array of pre-denoised reshaping function index values.

In an embodiment, the fifth array of co-occurrence statistics is collected from a clipped and quantized image derived from the input image after one of the clipped and quantized image or the input image is downsampled.

In an embodiment, the fourth array of co-occurrence statistics is stored in a first co-occurrence matrix; wherein the fifth array of co-occurrence statistics is stored in a second co-occurrence matrix; a co-occurrence statistic at a pixel location in the first array represents one of: an average or a minimum of, a first co-occurrence statistic at the pixel location in the first co-occurrence matrix and a second co-occurrence statistic at the pixel location in the second co-occurrence matrix.

In an embodiment, each reshaping function index value at a pixel location represented in the second array of reshaping function index values is generated as a weighted sum of a first reshaping function index value at the same pixel location represented in an array of an intermediate denoised reshaping function index values and a second reshaping function index value at the same pixel location represented in an array of a pre-denoised reshaping function index values.

In an embodiment, the weighted sum is specified with a weight element at the same pixel location in an array of weight mask values; the array of weight mask values is obtained from applying standard deviation filtering to the array of a pre-denoised reshaping function index values.

In an embodiment, the second array of reshaping function index values is generated based at least in part on denoised codewords in a denoised image of the second dynamic range; the denoised codewords in the denoised image of the second dynamic range is generated by the denoising operations performed on pre-denoised codewords in the input image of the second dynamic range.

In an embodiment, the reshaped image of the first dynamic range is generated from performing the reshaping operations on one of: the input image or the denoised image.

In an embodiment, the first array of co-occurrence statistics is collected from the pre-denoised codewords in the input image.

In an embodiment, the first dynamic range represents a high dynamic range; the second dynamic range represents a standard dynamic range lower than the high dynamic range.

In an embodiment, a computing device such as a display device, a mobile device, a set-top box, a multimedia device, etc., is configured to perform any of the foregoing methods. In an embodiment, an apparatus comprises a processor and is configured to perform any of the foregoing methods. In an embodiment, a non-transitory computer readable storage medium, storing software instructions, which when executed by one or more processors cause performance of any of the foregoing methods.

In an embodiment, a computing device comprising one or more processors and one or more storage media storing a set of instructions which, when executed by the one or more processors, cause performance of any of the foregoing methods.

Note that, although separate embodiments are discussed herein, any combination of embodiments and/or partial embodiments discussed herein may be combined to form further embodiments.

Example Computer System Implementation

Embodiments of the present invention may be implemented with a computer system, systems configured in electronic circuitry and components, an integrated circuit (IC) device such as a microcontroller, a field programmable gate array (FPGA), or another configurable or programmable logic device (PLD), a discrete time or digital signal processor (DSP), an application specific IC (ASIC), and/or apparatus that includes one or more of such systems, devices or components. The computer and/or IC may perform, control, or execute instructions relating to the adaptive perceptual quantization of images with enhanced dynamic range, such as those described herein. The computer and/or IC may compute any of a variety of parameters or values that relate to the adaptive perceptual quantization processes described herein. The image and video embodiments may be implemented in hardware, software, firmware and various combinations thereof.

Certain implementations of the invention comprise computer processors which execute software instructions which cause the processors to perform a method of the disclosure. For example, one or more processors in a display, an encoder, a set top box, a transcoder or the like may implement methods related to adaptive perceptual quantization of HDR images as described above by executing software instructions in a program memory accessible to the processors. Embodiments of the invention may also be provided in the form of a program product. The program product may comprise any non-transitory medium which carries a set of computer-readable signals comprising instructions which, when executed by a data processor, cause the data processor to execute a method of an embodiment of the invention. Program products according to embodiments of the invention may be in any of a wide variety of forms. The program product may comprise, for example, physical media such as magnetic data storage media including floppy diskettes, hard disk drives, optical data storage media including CD ROMs, DVDs, electronic data storage media including ROMs, flash RAM, or the like. The computer-readable signals on the program product may optionally be compressed or encrypted.

Where a component (e.g. a software module, processor, assembly, device, circuit, etc.) is referred to above, unless otherwise indicated, reference to that component (including a reference to a "means") should be interpreted as including as equivalents of that component any component which performs the function of the described component (e.g., that is functionally equivalent), including components which are not structurally equivalent to the disclosed structure which performs the function in the illustrated example embodiments of the invention.

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

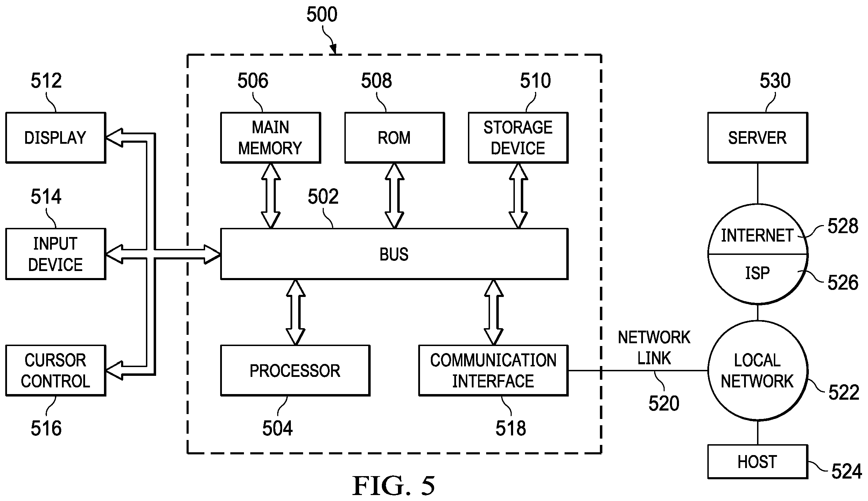

For example, FIG. 5 is a block diagram that illustrates a computer system 500 upon which an embodiment of the invention may be implemented. Computer system 500 includes a bus 502 or other communication mechanism for communicating information, and a hardware processor 504 coupled with bus 502 for processing information. Hardware processor 504 may be, for example, a general purpose microprocessor.

Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Such instructions, when stored in non-transitory storage media accessible to processor 504, render computer system 500 into a special-purpose machine that is customized to perform the operations specified in the instructions.

Computer system 500 further includes a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a liquid crystal display, for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

Computer system 500 may implement the techniques described herein using customized hard-wired logic, one or more ASICs or FPGAs, firmware and/or program logic which in combination with the computer system causes or programs computer system 500 to be a special-purpose machine. According to one embodiment, the techniques as described herein are performed by computer system 500 in response to processor 504 executing one or more sequences of one or more instructions contained in main memory 506. Such instructions may be read into main memory 506 from another storage medium, such as storage device 510. Execution of the sequences of instructions contained in main memory 506 causes processor 504 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 510. Volatile media includes dynamic memory, such as main memory 506. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 502. Transmission media can also take the form of acoustic or light waves, such as those generated during radio-wave and infra-red data communications.

Various forms of media may be involved in carrying one or more sequences of one or more instructions to processor 504 for execution. For example, the instructions may initially be carried on a magnetic disk or solid state drive of a remote computer. The remote computer can load the instructions into its dynamic memory and send the instructions over a telephone line using a modem. A modem local to computer system 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card, cable modem, satellite modem, or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are example forms of transmission media.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518.

The received code may be executed by processor 504 as it is received, and/or stored in storage device 510, or other non-volatile storage for later execution.

Equivalents, Extensions, Alternatives and Miscellaneous

In the foregoing specification, embodiments of the invention have been described with reference to numerous specific details that may vary from implementation to implementation. Thus, the sole and exclusive indicator of what is claimed embodiments of the invention, and is intended by the applicants to be claimed embodiments of the invention, is the set of claims that issue from this application, in the specific form in which such claims issue, including any subsequent correction. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

**Claims**

1. A computer-implemented method for generating images of a first dynamic range from input images of a second dynamic range, the method being performed by one or more processors and comprising:

   generating a first array of co-occurrence statistics in connection with an input

      image of the second dynamic range, wherein a co-occurrence statistics measures a frequency of a pair of values occurring together in an image or in an array of values,
      wherein the first array of co-occurrence statistics is a combination of a fourth array of co-occurrence statistics, which is collected from a binary cluster map derived from a third array of pre-denoised reshaping function index values, and a fifth array of co-occurrence statistics, which is collected from a clipped and quantized image derived from the input image (402);

   generating a second array of reshaping function index values for selecting reshaping functions from among a plurality of candidate reshaping functions, wherein the second array of reshaping function index values represents an array of denoised reshaping function index values generated by the denoising operations performed on the third array of pre-denoised reshaping function index values (404);
   performing (a) denoising operations (252) based at least in part on the first array of co-occurrence statistics and (b) reshaping operations based at least in part on the second array of reshaping function index values to generate a reshaped image of the first dynamic range (406).

2. The method of claim 1, wherein the binary cluster map is generated from applying standard deviation filtering on the third array of pre-denoised reshaping function index values.

3. The method of claim 2, wherein the standard deviation filtering is applied with at least two different spatial filtering kernel sizes on the third array of pre-denoised reshaping function index values.

4. The method of any one of claims 1-3, wherein the fifth array of co-occurrence statistics is collected from a clipped and quantized image derived from the input image after one of the clipped and quantized image or the input image is downsampled.

5. The method of any one of claims 1-4, wherein the fourth array of co-occurrence statistics is stored in a first co-occurrence matrix; wherein the fifth array of co-occurrence statistics is stored in a second co-occurrence matrix; wherein a co-occurrence statistic at a pixel location in the first array represents one of: an average or a minimum of, a first co-occurrence statistic at the pixel location in the first co-occurrence matrix and a second co-occurrence statistic at the pixel location in the second co-occurrence matrix.

6. The method of any one of claims 1-5, wherein each reshaping function index value at a pixel location represented in the second array of reshaping function index values is generated as a weighted sum of a first reshaping function index value at the same pixel location represented in an array of an intermediate denoised reshaping function index values and a second reshaping function index value at the same pixel location represented in an array of a pre-denoised reshaping function index values.

7. The method of claim 6, wherein the weighted sum is specified with a weight element at the same pixel location in an array of weight mask values; wherein the array of weight mask values is obtained from applying standard deviation filtering to the array of a pre-denoised reshaping function index values.

8. The method of any one of claims 1-7, wherein the first array of co-occurrence statistics is generated with a region of interest map that excludes co-occurrence statistics of pixel locations in a letter box, wherein the letter box refers to one or more static regions of arbitrary shape, such as letterboxes, pillar-boxes, ovals, or other shapes.

9. The method of any one of claims 1-8, wherein the first array of co-occurrence statistics is downsampled from a pre-sampled array of co-occurrence statistics.

10. The method of claim 1, wherein the second array of reshaping function index values is generated based at least in part on denoised codewords in a denoised image of the second dynamic range; wherein the denoised codewords in the denoised image of the second dynamic range is generated by the denoising operations performed on pre-denoised codewords in the input image of the second dynamic range, wherein codeword refers to a pixel value.

11. The method of claim 10, wherein the reshaped image of the first dynamic range is generated from performing the reshaping operations on one of: the input image or the denoised image.

12. The method of claim 10 or claim 11, wherein the first array of co-occurrence statistics is collected from the pre-denoised codewords in the input image.

13. The method of any one of claims 1-12, wherein the first dynamic range represents a high dynamic range; wherein the second dynamic range represents a standard dynamic range lower than the high dynamic range.

14. An apparatus comprising a processor (504) and configured to perform the method of any one of claims 1-13.

15. A non-transitory computer-readable storage medium (506) having stored thereon computer-executable instruction for executing with one or more processors (504) the method of any one of claims 1-13.

**Patentansprüche**

1. Computerimplementiertes Verfahren zum Erzeugen von Bildern eines ersten Dynamikbereichs aus Eingabebildern eines zweiten Dynamikbereichs, wobei das Verfahren von einem oder mehreren Prozessoren durchgeführt wird und Folgendes umfasst:

Erzeugen eines ersten Arrays von Statistiken des gemeinsamen Auftretens in Verbindung mit einem Eingabebild des zweiten Dynamikbereichs, wobei eine Statistik des gemeinsamen Auftretens eine Häufigkeit eines Wertepaars misst, das zusammen in einem Bild oder in einem Werte-Array auftritt,
wobei das erste Array von Statistiken des gemeinsamen Auftretens eine Kombination aus einem vierten Array von Statistiken des gemeinsamen Auftretens ist, das aus einem binären Cluster-Abbild erfasst wird, die aus einem dritten Array von vorentrauschten Umformungsfunktionsindexwerten abgeleitet ist, und einem fünften Array von Statistiken des gemeinsamen Auftretens, das aus einem aus dem Eingabebild (402) abgeleiteten, zugeschnittenen und quantisierten Bild erfasst wird;
Erzeugen eines zweiten Arrays von Umformungsfunktionsindexwerten zum Auswählen von Umformungsfunktionen aus einer Vielzahl von Kandidaten-Umformungsfunktionen, wobei das zweite Array von Umformungsfunktionsindexwerten ein Array von rauschbereinigten Umformungsfunktionsindexwerten darstellt, die durch die Rauschbeseitigungsvorgänge erzeugt wurden, die an dem dritten Array von vorrauschbereinigten Umformungsfunktionsindexwerten (404) durchgeführt wurden;
Durchführen von (a) Entrauschungsvorgängen (252), die zumindest teilweise auf dem ersten Array von Statistiken des gemeinsamen Auftretens basieren, und (b) Umformungsvorgängen, die zumindest teilweise auf dem zweiten Array von Umformungsfunktionsindexwerten basieren, um ein umgeformtes Bild des ersten Dynamikbereichs (406) zu erzeugen.

2. Verfahren nach Anspruch 1, wobei das binäre Cluster-Abbild durch Anwenden einer Standardabweichungsfilterung auf das dritte Array von vorentrauschten Umformungsfunktionsindexwerten erzeugt wird.

3. Verfahren nach Anspruch 2, wobei die Standardabweichungsfilterung mit zumindest zwei unterschiedlichen räumlichen Filterkerngrößen auf das dritte Array von vorentrauschten Umformungsfunktionsindexwerten angewendet wird.

4. Verfahren nach einem der Ansprüche 1-3, wobei das fünfte Array von Statistiken des gemeinsamen Auftretens aus einem zugeschnittenen und quantisierten Bild erfasst wird, das aus dem Eingabebild abgeleitet wird, nachdem entweder das zugeschnittene und quantisierte Bild oder das Eingabebild heruntergesampelt wurde.

**5.** Verfahren nach einem der Ansprüche 1-4, wobei das vierte Array von Statistiken des gemeinsamen Auftretens in einer ersten Matrix des gemeinsamen Auftretens gespeichert wird; wobei das fünfte Array von Statistiken des gemeinsamen Auftretens in einer zweiten Matrix des gemeinsamen Auftretens gespeichert wird; wobei eine Statistik des gemeinsamen Auftretens an einer Pixelposition im ersten Array eines der Folgenden darstellt: einen Durchschnitt oder ein Minimum einer ersten Statistik des gemeinsamen Auftretens an der Pixelposition in der ersten Matrix des gemeinsamen Auftretens und einer zweiten Statistik des gemeinsamen Auftretens an der Pixelposition in der zweiten Matrix des gemeinsamen Auftretens.

**6.** Verfahren nach einem der Ansprüche 1-5, wobei jeder Indexwert der Umformungsfunktion an einer Pixelposition, die in dem zweiten Array von Indexwerten der Umformungsfunktion dargestellt ist, als gewichtete Summe eines ersten Indexwerts der Umformungsfunktion an derselben Pixelposition, der in einem Array von Indexwerten der Umformungsfunktion mit Zwischenbereinigung dargestellt ist, und eines zweiten Indexwerts der Umformungsfunktion an derselben Pixelposition, der in einem Array von Indexwerten der Umformungsfunktion vor der Bereinigung dargestellt ist, erzeugt wird.

**7.** Verfahren nach Anspruch 6, wobei die gewichtete Summe mit einem Gewichtungselement an der gleichen Pixelposition in einem Array von Gewichtungsmaskenwerten spezifiziert wird; wobei das Array von Gewichtungsmaskenwerten durch Anwenden einer Standardabweichungsfilterung auf das Array von vorab entrauschten Indizes der Umformungsfunktion erhalten wird.

**8.** Verfahren nach einem der Ansprüche 1-7, wobei das erste Array von Statistiken des gemeinsamen Auftretens mit einem Abbild des Interessenbereichs erzeugt wird, die Statistiken des gemeinsamen Auftretens von Pixelpositionen in einem Letterbox-Bereich ausschließt, wobei sich der Letterbox-Bereich auf einen oder mehrere statische Bereiche beliebiger Form bezieht, beispielsweise Letterboxen, Pillarboxen, Ovale oder andere Formen.

**9.** Verfahren nach einem der Ansprüche 1-8, wobei das erste Array von Statistiken des gemeinsamen Auftretens aus einem vorabgetasteten Array von Statistiken des gemeinsamen Auftretens heruntergesampelt wird.

**10.** Verfahren nach Anspruch 1, wobei das zweite Array von Umformungsfunktionsindexwerten zumindest teilweise basierend auf rauschbereinigten Codewörtern in einem rauschbereinigten Bild des zweiten Dynamikbereichs erzeugt wird; wobei die rauschbereinigten Codewörter in dem rauschbereinigten Bild des zweiten Dynamikbereichs durch die Rauschbereinigungsvorgänge erzeugt werden, die an vorab rauschbereinigten Codewörtern in dem Eingabebild des zweiten Dynamikbereichs durchgeführt werden, wobei sich Codewort auf einen Pixelwert bezieht.

**11.** Verfahren nach Anspruch 10, wobei das umgeformte Bild des ersten Dynamikbereichs durch Durchführen der Umformungsvorgänge an einem erzeugt wird vom: dem Eingabebild oder dem rauschbereinigten Bild.

**12.** Verfahren nach Anspruch 10 oder Anspruch 11, wobei das erste Array von Statistiken des gemeinsamen Auftretens aus den vorab entrauschten Codewörtern im Eingabebild erfasst wird.

**13.** Verfahren nach einem der Ansprüche 1- 12, wobei der erste Dynamikbereich einen hohen Dynamikbereich darstellt; wobei der zweite Dynamikbereich einen Standard-Dynamikbereich darstellt, der niedriger ist als der hohe Dynamikbereich.

**14.** Einrichtung, die einen Prozessor (504) umfasst und konfiguriert ist, um das Verfahren nach einem der Ansprüche 1-13 durchzuführen.

**15.** Nichtflüchtiges computerlesbares Speichermedium (506), auf dem computerausführbare Anweisungen zum Ausführen des Verfahrens nach einem der Ansprüche 1-13 mit einem oder mehreren Prozessoren (504) gespeichert sind.

### Revendications

**1.** Procédé mis en œuvre par ordinateur pour générer des images d'une première plage dynamique à partir d'images d'entrée d'une seconde plage dynamique, le procédé étant réalisé par un ou plusieurs processeurs et comprenant :

la génération d'un premier ensemble de statistiques de cooccurrence en relation avec une image d'entrée de la seconde plage dynamique, dans lequel une statistique de cooccurrence mesure une fréquence d'une paire de valeurs apparaissant ensemble dans une image ou dans un ensemble de valeurs, dans lequel le premier ensemble de statistiques de cooccurrence est une combinaison d'un quatrième ensemble de statistiques de cooccurrence, qui est collecté à partir d'une carte de groupement binaire dérivée d'un troisième ensemble de valeurs d'index de fonction de remodelage pré-débruitées, et d'un cinquième ensemble de statistiques de cooccurrence, qui est collecté à partir d'une image rognée et quantifiée dérivée de l'image d'entrée (402) ;

la génération d'un deuxième ensemble de valeurs d'index de fonction de remodelage pour sélectionner des fonctions de remodelage parmi une pluralité de fonctions de remodelage candidates, dans lequel le deuxième ensemble de valeurs d'index de fonction de remodelage représente un ensemble de valeurs d'index de fonction de remodelage débruitées générées par les opérations de débruitage effectuées sur le troisième ensemble de valeurs d'index de fonction de remodelage pré-débruitées (404) ;

la réalisation (a) d'opérations de débruitage (252) sur la base, au moins en partie, du premier ensemble de statistiques de cooccurrence et (b) d'opérations de remodelage sur la base, au moins en partie, du deuxième ensemble de valeurs d'index de fonction de remodelage pour générer une image remodelée de la première plage dynamique (406).

**2.** Procédé selon la revendication 1, dans lequel la carte de groupement binaire est générée à partir de l'application d'un filtrage d'écart type sur le troisième ensemble de valeurs d'index de fonction de remodelage pré-débruitées.

**3.** Procédé selon la revendication 2, dans lequel le filtrage d'écart type est appliqué avec au moins deux tailles de noyau de filtrage spatial différentes sur le troisième ensemble de valeurs d'index de fonction de remodelage pré-débruitées.

**4.** Procédé selon l'une quelconque des revendications 1-3, dans lequel le cinquième ensemble de statistiques de cooccurrence est collecté à partir d'une image rognée et quantifiée dérivée de l'image d'entrée après que l'une de l'image rognée et quantifiée ou de l'image d'entrée est sous-échantillonnée.

**5.** Procédé selon l'une quelconque des revendications 1-4, dans lequel le quatrième ensemble de statistiques de cooccurrence est stocké dans une première matrice de cooccurrence ; dans lequel le cinquième ensemble de statistiques de cooccurrence est stocké dans une seconde matrice de cooccurrence ; dans lequel une statistique de cooccurrence à un emplacement de pixel dans le premier ensemble représente un : d'une moyenne ou d'un minimum d'une première statistique de cooccurrence à l'emplacement de pixel dans la première matrice de cooccurrence et d'une seconde statistique de cooccurrence à l'emplacement de pixel dans la seconde matrice de cooccurrence.

**6.** Procédé selon l'une quelconque des revendications 1-5, dans lequel chaque valeur d'indice de fonction de remodelage à un emplacement de pixel représenté dans le second ensemble de valeurs d'indice de fonction de remodelage est générée en tant que somme pondérée d'une première valeur d'indice de fonction de remodelage au même emplacement de pixel représenté dans un ensemble de valeurs d'indice de fonction de remodelage débruitées intermédiaires et d'une seconde valeur d'indice de fonction de remodelage au même emplacement de pixel représenté dans un ensemble de valeurs d'indice de fonction de remodelage pré-débruitées.

**7.** Procédé selon la revendication 6, dans lequel la somme pondérée est spécifiée avec un élément de pondération au même emplacement de pixel dans un ensemble de valeurs de masque de pondération ; dans lequel l'ensemble de valeurs de masque de pondération est obtenu en appliquant un filtrage d'écart type à l'ensemble de valeurs d'index de fonction de remodelage pré-débruitées.

**8.** Procédé selon l'une quelconque des revendications 1-7, dans lequel le premier ensemble de statistiques de cooccurrence est généré avec une carte de région d'intérêt qui exclut des statistiques de cooccurrence d'emplacements de pixels dans une boîte aux lettres, dans lequel la boîte aux lettres fait référence à une ou plusieurs régions statiques de forme arbitraire, telles que des boîtes aux lettres, des boîtes en colonne, des ovales ou d'autres formes.

**9.** Procédé selon l'une quelconque des revendications 1-8, dans lequel le premier ensemble de statistiques de cooccurrence est sous-échantillonné à partir d'un ensemble pré-échantillonné de statistiques de cooccurrence.

**10.** Procédé selon la revendication 1, dans lequel le second ensemble de valeurs d'index de fonction de remodelage est généré sur la base, au moins en partie, de mots de code débruités dans une image débruitée de la seconde plage dynamique ; dans lequel les mots de code débruités dans l'image débruitée de la seconde plage dynamique sont générés par les opérations de débruitage effectuées sur des mots de code pré-débruités dans l'image d'entrée de la seconde plage dynamique, dans lequel le mot de code fait référence à une valeur de pixel.

**11.** Procédé selon la revendication 10, dans lequel l'image remodelée de la première plage dynamique est générée à partir de la réalisation des opérations de remodelage sur une : de l'image d'entrée ou de l'image débruitée.

**12.** Procédé selon la revendication 10 ou la revendication 11, dans lequel le premier ensemble de statistiques de cooccurrence est collecté à partir des mots de code pré-débruités dans l'image d'entrée.

**13.** Procédé selon l'une quelconque des revendications 1-12, dans lequel la première plage dynamique représente une plage dynamique élevée ; dans lequel la seconde plage dynamique représente une plage dynamique standard inférieure à la plage dynamique élevée.

**14.** Appareil comprenant un processeur (504) et configuré pour réaliser le procédé selon l'une quelconque des revendications 1-13.

**15.** Support de stockage non transitoire lisible par ordinateur (506) sur lequel est stockée une instruction exécutable par ordinateur pour exécuter, avec un ou plusieurs processeurs (504), le procédé selon l'une quelconque des revendications 1-13.

100

115                                                        120

102          SDR TO HDR                    107    HDR VIDEO        122
             UP-CONVERSION                        ENCODER
        105        DENOISING

FIG. 1

FIG. 2A

EP 4 441 697 B1

SDR `202` → DENOISING MODULE `260` → DENOISED SDR `262` → GLOBAL RESHAPING FUNCTION `204`

MULTI-LEVEL EDGE-PRESERVING FILTERING `206` → LOCAL RESHAPING FUNCTION `208` → RESHAPING FUNCTION INDEX MAP `210`

LOCAL RESHAPING (LUMA AND CHROMA) `212` → HDR `214`

**FIG. 2B**

---

SDR `202` → DENOISING MODULE `260` → DENOISED SDR `262` → GLOBAL RESHAPING FUNCTION `204`

MULTI-LEVEL EDGE-PRESERVING FILTERING `206` → LOCAL RESHAPING FUNCTION `208` → RESHAPING FUNCTION INDEX MAP `210`

LOCAL RESHAPING (LUMA AND CHROMA) `212` → HDR `214`

**FIG. 2C**

260

DENOISING MODULE

266

268

DENOISED
SDR IMAGE

SDR

COLLECT CO-OCCURRENCE
STATISTICS

DENOISE SDR
IMAGE

202

262

**FIG. 2D**

202

204

SDR

GLOBAL RESHAPING
FUNCTION

206

208

210

MULTI-LEVEL EDGE-
PRESERVING FILTERING

LOCAL RESHAPING
FUNCTION

RESHAPING
FUNCTION INDEX MAP

DENOISING MODULE

252

260

DENOISING MODULE

DENOISED RESHAPING
FUNCTION INDEX MAP

254

DENOISED SDR

LOCAL RESHAPING
(LUMA AND CHROMA)

HDR

262

**FIG. 2E**

212

214

270

INPUT SDR
IMAGE

→

GET CO-OCCURRENCE
STATISTICS

CO-OCCURRENCE
MATRIX $M_1$

→

202

RESHAPING
FUNCTION
INDEX MAP

→

272

OBTAIN BINARY
CLUSTER MAP

→

270

GET CO-OCCURRENCE
STATISTICS

CO-OCCURRENCE
MATRIX $M_2$

→

210

## FIG. 2F

→ $s^Y$

CLIP

→

QUANTIZE

$s^Q$ →

## FIG. 2G

→ $s^Q$

DOWNSAMPLE

$s^{Qd}$ →

COLLECT CO-OCCURRENCE
STATISTICS

$M_1$ →

## FIG. 2H

EP 4 441 697 B1

RESHAPING
FUNCTION
INDEX MAP

WEIGHTED STD FILTER WITH KERNEL SIZE $k_1$ → $std\_map_1$ → GAUSSIAN FILTER → BLURRED $std\_map_1$ → THRESHOLD $t_1$ → $img_1$

WEIGHTED STD FILTER WITH KERNEL SIZE $k_2$ → $std\_map_2$ → THRESHOLD $t_2$ → $img_2$

$img_1$ * $img_2$ → K

## FIG. 2I

RESHAPING FUNCTION INDEX MAP $L$ → OBTAIN WEIGHT MASK → WEIGHT MASK $W$

RESHAPING FUNCTION INDEX MAP $L$

RESHAPING FUNCTION INDEX MAP $L$

CO-OCCURRENCE MATRICES $M_1$ AND $M_2$ → SMOOTH $L$ WITH CO-OCCURRENCE MATRICES $M_1$ AND $M_2$ → $L_d$

WEIGHTED SUM → $L_f = L_d \cdot * W + L \cdot * (1\text{-}W)$

## FIG. 2J

RESHAPING
FUNCTION
INDEX MAP

→ | WEIGHTED STD FILTER WITH KERNEL SIZE $k_2$ | $\text{std\_map}_2$ → | GAUSSIAN FILTER | → | CLIP AND NORMALIZE | →

WEIGHT
MASK $W$

## FIG. 2K

## FIG. 3A

$f_{cn}(x)$

1

$l = 60$     $h = 200$     x

## FIG. 3B

402 — GENERATE A FIRST ARRAY OF
CO-OCCURRENCE STATISTICS

404 — GENERATE A SECOND ARRAY OF
RESHAPING FUNCTION INDEX VALUES

406 — PERFORM DENOISING AND RESHAPING
OPERATIONS TO GENERATE A RESHAPED
IMAGE OF THE FIRST DYNAMIC RANGE

## FIG. 4

**FIG. 5**

EP 4 441 697 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63283684
- EP 21210983
- WO 2021202933 A1
- US 2021053241 W
- US 62136402
- US 20180020224
- US 2019031620 W
- US 63086699
- US 63209602, T-W Huang and G-M Su
- US 10397576 B, H. Kadu and G-M. Su

**Non-patent literature cited in the description**

- Reference electro-optical transfer function for flat panel displays used in HDTV studio production. *ITU Rec. ITU-R BT. 1886*, March 2011
- High Dynamic Range EOTF of Mastering Reference Displays. *SMPTE ST 2084:2014*
- Image parameter values for high dynamic range television for use in production and international programme exchange. *SMPTE 2084 and Rec. ITU-R BT.2100*, June 2017
- Image denoising review: from classical to state-of-the-art approaches. **GOYAL BHAWNA et al.** INFORMATION FUSION. ELSEVIER, 06 September 2019, vol. 55, 220-244
- **JEVNISEK, ROY J.** ; **SHAI, AVIDAN**. Co-occurrence filter. *Proceedings of the IEEE Conference on Computer Vision and Pattern Recognition*, vol. 7 (20), 3184-3192